# EUROPÄISCHE PATENTANMELDUNG

(11) **EP 4 213 353 A1**
(43) Veröffentlichungstag der Anmeldung: **19.07.2023**
(21) Anmeldenummer: 22160521.5
(22) Anmeldetag: 07.03.2022
(51) Int. Cl.: H02K 15/04, H02K 15/06

(54) **VORRICHTUNG UND VERFAHREN ZUM HERSTELLEN EINER GESTECKTEN WELLENWICKLUNG**

(30) Priorität: 14.01.2022 DE 102022100859
(71) Anmelder: Grob-Werke GmbH & Co. KG, 87719 Mindelheim (DE)
(72) Erfinder: Wiedemann, Stefan, 86872 Scherstetten (DE); Schmölz, Markus, 87668 Rieden (DE); Ziegler, Manfred, 86856 Hiltenfingen (DE)
(74) Vertreter: KASTEL Patentanwälte PartG mbB

(57) **Zusammenfassung**

Eine Vorrichtung (10) und zugehöriges Verfahren betreffen das Herstellen einer gesteckten Wellenwicklung (12) durch Zusammenstecken eines ersten Wellenwicklungsteils (14) mit einem zweiten Wellenwicklungsteil (16). Um den Steckvorgang prozesssicher zu automatisieren, wird vorgeschlagen, dass - eine erste Aufnahme (18) für das erste Wellenwicklungsteil (14) erste Führungselemente (48a, 48b) zum Führen geradliniger Drahtabschnitte (28) dieses Wellenwicklungsteils aufweist, - eine zweite Aufnahme (34) für das zweite Wellenwicklungsteil (16) zweite Führungselemente (50a, 50b) zum Führen geradliniger Drahtabschnitte (28) dieses Wellenwicklungsteils aufweist, - eine Biegeeinrichtung (44) zum Biegen von Teilbereichen (32) wenigstens eines Wellenwicklungsteils (14) derart ausgebildet ist, um zumindest einen der zu anderen Wellenwicklungsteile (16) gerichteten Wicklungsköpfe (30) zum Ineinanderstecken der Wellenwicklungsteile (14, 16) versetzt werden, und - eine Relativverschiebungseinrichtung (46) zum Ineinanderschieben des ersten und des zweiten Wellenwicklungsteils (14, 16) der Wellenwicklung,

wobei die ersten (48a, 48b) oder zweiten Führungselemente (50a, 50b) zwischen einer Führungsstellung der geradlinigen Drahtabschnitte (28) und einer Freigabestellung, zum Ineinanderstecken der Wickelköpfe, bewegbar sind.

## Beschreibung

Die Erfindung betrifft eine Vorrichtung und ein Verfahren zum Herstellen einer gesteckten Wellenwicklung.

Zum technologischen Hintergrund wird auf folgende Literaturstellen verwiesen:
[1] WO 2019/166 060 A1
[2] WO 2019/166 061 A1
[3] WO 2020/033858 (entspricht DE 11 2019 004 024 T5)

Aus den Literaturstellen [1] bis [3] sind gesteckte Wellenwicklungen sowie Vorrichtungen und Verfahren zu deren Herstellung bekannt.

Begriffsdefinitionen:
Als gesteckte Wellenwicklung wird eine aus mehreren Wellenwicklungsdrähten durch Stecken zusammengesetzte Leiteranordnung zum Bilden einer Spulenwicklung einer elektrischen Maschine verstanden. Bei bevorzugten Ausgestaltungen der Erfindung ist die Wellenwicklung als Wickelmatte zum Herstellen der Spulenwicklung der elektrischen Maschine ausgebildet. Unter einer Wickelmatte wird ein aus mehreren Wellenwicklungsdrähten gebildetes mattenförmiges Leiterbündel verstanden. Als Wellenwicklungsdraht wird ein wellenartig gebogener Draht, in der Regel mit äußerer Isolationshülle, z.B. einem Film aus Kunststoff, verstanden, der sich in einer Längsrichtung erstreckt und in Längsrichtung beabstandete und sich in einer quer zur Längsrichtung verlaufenden Querrichtung erstreckende geradlinige Drahtabschnitte und dachförmige Wicklungsköpfe dazwischen derart aufweist, dass benachbarte geradlinige Drahtabschnitte durch einen dachförmig gebogenen Wicklungskopf miteinander verbunden sind. Bei dem wellenartig gebogenen Wellenwicklungsdraht sind die Wicklungsköpfe alternierend auf der einen oder der anderen Seite zum Verbinden der geradlinigen Drahtabschnitte vorgesehen. Eine Welle des Wellenwicklungsdrahtes weist zwei geradlinige Drahtabschnitte und zwei Wicklungsköpfe auf, von denen ein Wicklungskopf auf der einen und einen anderer Wicklungskopf auf der anderen Seite, entgegengesetzt, insbesondere spiegelbildlich gebogen zu dem einen Wicklungskopf vorgesehen ist. Eine Halbwelle weist einen oder zwei geradlinige Drahtabschnitte mit einem Wicklungskopf dazwischen auf. Die geradlinigen Drahtabschnitte der Wellenwicklungsdrähte dienen insbesondere dazu, in Nuten eines Gehäuses eines Bauteils einer elektrischen Maschine, wie insbesondere einem Stator eines Elektromotors, eingefügt zu werden. Die Wicklungsköpfe bilden jeweils einen Umschlag und stehen bei bestimmungsgemäßem Gebrauch in dem Gehäuse des Bauteils der elektrischen Maschine, wie beispielsweise einem Blechpaket eines Stators oder Rotors, außen an den axial gerichteten Gehäuseenden vor und verbinden den Drahtabschnitt einer Nut mit einem Drahtabschnitt in einer anderen Nut. Die Wellenwicklungsdrähte haben insbesondere einen Kern aus elektrisch leitendem Material, wie insbesondere Kupfer, vorzugsweise mit rechteckigem Querschnitt, und eine Isolationsschicht.

Wie man insbesondere den Literaturstellen [1] und [2] entnehmen kann, auf die für weitere Einzelheiten ausdrücklich verwiesen wird, wird eine gesteckte Wellenwicklung durch Stecken von mehreren Wellenwicklungsdrähten oder durch Stecken von mehreren Wellenwicklungsdrahtanordnungen, wie insbesondere Teilmatten einer Wicklungsmatte, zusammengefügt. Werden z.B. zwei Wellenwicklungsdrähte zusammengesteckt, werden sie nebeneinander gelegt, dann zueinander gerichtete Wicklungsköpfe relativ zueinander in entgegengesetzte Richtungen versetzt, die sich im Wesentlichen quer zur Längsrichtung und im Wesentlichen quer zu den geradlinigen Drahtabschnitten erstrecken und im Wesentlichen parallel zu den geradlinigen Drahtabschnitten zueinander bewegt, um die Wellenwicklungsdrähte ineinander zu stecken. In analoger Weise erfolgt ein Ineinanderstecken mehrerer Wellenwicklungsdrahtanordnungen.

Gesteckte Wellenwicklungen haben sich bewährt und bieten die in den Literaturstellen [1] und [2] erläuterten wesentlichen Vorteile hinsichtlich einer zuverlässigen industriellen Großherstellung von Spulenwicklungen, die besondere elektrische Eigenschaften bieten.

Die Erfindung hat sich zur Aufgabe gestellt, Vorrichtung und Verfahren zur Verfügung zu stellen, mit denen sich die Herstellung solcher gesteckter Wellenwicklung weiter verbessern lässt.

Zum Lösen dieser Aufgabe schafft die Erfindung eine Vorrichtung und ein Verfahren zur Herstellung einer gesteckten Wellenwicklung.

Vorteilhafte Ausgestaltungen sind Gegenstand der Unteransprüche.

Die Erfindung schafft gemäß einem ersten Aspekt davon eine Vorrichtung zum Herstellen einer gesteckten Wellenwicklung, die zum Bilden wenigstens eines Teils einer Spulenwicklung für ein Bauteil einer elektrischen Maschine ausgebildet ist, durch Zusammenstecken eines ersten Wellenwicklungsteils mit einem zweiten Wellenwicklungsteil, wobei der erste Wellenwicklungsteil durch wenigstens einen ersten Wellenwicklungsdraht gebildet ist und der zweite Wellenwicklungsteil durch wenigstens einen zweiten Wellenwicklungsdraht gebildet ist, wobei sich die Wellenwicklungsdrähte jeweils in eine Längsrichtung erstrecken und sich in einer im Wesentlichen quer zur Längsrichtung verlaufenden ersten Querrichtung erstreckende geradlinige Drahtabschnitte und dachförmige Wicklungsköpfe dazwischen derart aufweisen, dass benachbarte geradlinige Drahtabschnitte durch einen dachförmig gebogenen Wicklungskopf miteinander verbunden sind, wobei die Vorrichtung umfasst:
eine erste Aufnahme zum Aufnehmen des ersten Wellenwicklungsteils, wobei die erste Aufnahme erste Führungselemente zum Führen geradliniger Drahtabschnitte des ersten Wellenwicklungsteils aufweist,
eine zweite Aufnahme zum Aufnehmen des zweiten Wellenwicklungsteils, wobei die zweite Aufnahme zweite Führungselemente zum Führen geradliniger Drahtabschnitte des zweiten Wellenwicklungsteils aufweist,
eine Biegeeinrichtung zum Biegen von Teilbereichen wenigstens einer der Wellenwicklungsteile derart, dass einer oder mehrere der zu dem anderen Wellenwicklungsteil gerichteten Wicklungsköpfe in einer zweiten Querrichtung, die sich im Wesentlichen quer zu der Längsrichtung und quer zu der ersten Querrichtung erstreckt, zum Ineinanderstecken der Wellenwicklungsteile versetzt werden, und
eine Relatiwerschiebungseinrichtung zum Ineinanderschieben des ersten und des zweiten Wellenwicklungsteils der Wellenwicklung, um so die Wellenwicklungsteile ineinander zu stecken, wobei die ersten und/oder die zweiten Führungselemente zwischen einer Führungsstellung zum Führen der geradlinigen Drahtabschnitte und einer Freigabestellung zum Freigeben des Weges von Wicklungsköpfen im Zuge des Ineinandersteckens bewegbar sind.

Bei einer bevorzugten Ausgestaltung ist die Biegeeinrichtung zum elastischen Biegen ausgebildet.

Die bewegbaren Elemente der Vorrichtung, wie insbesondere bewegbare Führungselemente und bewegbare Elemente wie z.B. Stempel oder dergleichen der Biegeeinrichtung, weisen vorzugsweise jeweils wenigstens einen Aktor oder wenigstens einen Aktor für synchron zu bewegende Gruppen dieser Elemente auf, wobei die Aktoren weiter vorzugsweise mit wenigstens einer elektronischen Steuereinheit verbunden sind, die dazu ausgebildet ist, die Elemente in vorbestimmter Weise zum Führen und/oder Biegen oder Halten anzusteuern.

Es ist bevorzugt, dass die ersten und/oder zweiten Führungselemente als primäre Führungselemente in der Führungsstellung von einer Seite aus sich in zweiter Querrichtung erstreckend in den zugeordneten Wellenwicklungsteil eingreifen und von der Führungsstellung in Richtung auf diese eine Seite zu in die Freigabestellung bewegbar sind und dass zusätzlich zu den primären Führungselemente sekundäre Führungselemente vorgesehen sind, die zwischen einer Freigabestellung zum Passieren von Wicklungsköpfen beim Ineinanderschieben und einer Führungsstellung zur Führung der geradlinigen Drahtabschnitte bewegbar sind. Dabei ist weiter vorzugsweise vorgesehen, dass die sekundären Führungselemente in der Führungsstellung von der anderen Seite sich in der zweiten Querrichtung entgegengesetzt zu den primären Führungselementen erstreckend in den zugeordneten Teil der Wellenwicklung eingreifen und von der Führungsstellung in Richtung auf diese andere Seite zu in die Freigabestellung bewegbar sind. Bei alternativen Ausgestaltungen ist vorgesehen, dass die sekundären Führungselemente oder einige der sekundären Führungselemente in der Führungsstellung von der einen Seite sich in der zweiten Querrichtung gleichgerichtet zu den primären Führungselementen erstreckend in den zugeordneten Teil der Wellenwicklung eingreifen und von der Führungsstellung in Richtung auf diese eine Seite zu in die Freigabestellung bewegbar sind.

Es ist bevorzugt, dass vordere Führungselemente zum Angreifen an dem anderen Wellenwicklungsteil zugewandten vorderen Bereichen des zu führenden Wellenwicklungsteils und hintere Führungselemente zum Angreifen an hinteren Bereichen des ersten Wellenwicklungsteils, die von dem anderen Wellenwicklungsteil abgewandt sind, vorgesehen sind, wobei die vorderen und hinteren Führungselemente unterschiedlich zueinander und/oder unabhängig voneinander bewegbar sind.

Es ist bevorzugt, dass die ersten Führungselemente vordere erste Führungselemente zum Angreifen an dem zweiten Wellenwicklungsteil zugewandten vorderen Bereichen des ersten Wellenwicklungsteils und hintere erste Führungselemente zum Angreifen an hinteren Bereichen des ersten Wellenwicklungsteils, die von dem zweiten Wellenwicklungsteil abgewandt sind, aufweisen, wobei die vorderen und hinteren ersten Führungselemente unterschiedlich zueinander und/oder unabhängig voneinander bewegbar sind.

Es ist bevorzugt, dass die zweiten Führungselemente vordere zweite Führungselemente zum Angreifen an dem ersten Wellenwicklungsteil zugewandten vorderen Bereichen des zweiten Wellenwicklungsteils und hintere zweite Führungselemente zum Angreifen an hinteren Bereichen des zweiten Wellenwicklungsteils, die von dem ersten Wellenwicklungsteil abgewandt sind, aufweisen, wobei die vorderen und hinteren zweiten Führungselemente unterschiedlich zueinander und/oder unabhängig voneinander bewegbar sind.

Es ist bevorzugt, dass die primären Führungselemente vordere primäre Führungselemente zum Angreifen an dem anderen Wellenwicklungsteil zugewandten vorderen Bereichen des zu führenden Wellenwicklungsteils und hintere primäre Führungselemente zum Angreifen an hinteren Bereichen des zu führenden Wellenwicklungsteils, die von dem anderen Wellenwicklungsteil abgewandt sind, aufweisen, wobei die vorderen und hinteren primären Führungselemente unterschiedlich zueinander und/oder unabhängig voneinander bewegbar sind.

Es ist bevorzugt, dass die sekundären Führungselemente vordere sekundäre Führungselemente zum Angreifen an dem anderen Wellenwicklungsteil zugewandten vorderen Bereichen des zu führenden Wellenwicklungsteils und hintere sekundäre Führungselemente zum Angreifen an hinteren Bereichen des führenden Wellenwicklungsteils, die von dem anderen Wellenwicklungsteil abgewandt sind, aufweisen, wobei die vorderen und hinteren sekundären Führungselemente unterschiedlich zueinander und/oder unabhängig voneinander bewegbar sind.

Es ist bevorzugt, dass die erste und/oder die zweite Aufnahme eine rechen- oder kammartige Struktur mit Stiften aufweisen, wobei die Stifte beweglich sind und die Führungselemente bilden.

Es ist bevorzugt, dass die Relatiwersschiebungseinrichtung wenigstens einen Schieber zum relativen Einschieben eines der Wellenwicklungsteile in der ersten Querrichtung in das andere der Wellenwicklungsteile aufweist.

Es ist bevorzugt, dass die Biegeeinrichtung zum Verbiegen der Teilbereiche an dem ersten Wellenwicklungsteil ausgebildet ist und die Relativverschiebungseinrichtung zum Einschieben des zweiten Wellenwicklungsteils in das elastisch verbogene erste Wellenwicklungsteil ausgebildet ist.

Es ist bevorzugt, dass die Vorrichtung wenigstens einen bewegbaren Stempel aufweist, der weiter bevorzugt in zweiter Querrichtung bewegbar ausgebildet ist und insbesondere mittels eines Aktors, dieser weiter bevorzugt mit entsprechender elektronischer Steuereinheit verbunden, zur in vorbestimmter Weise erfolgender Bewegung ausgebildet ist. Beispielsweise kann der Stempel zum Halten wenigstens eines der Wellenwicklungsteile in seiner Position ausgebildet sein. Der wenigstens eine Stempel oder wenigstens einer von mehreren Stempeln kann aber auch zum Biegen ausgebildet sein und somit einen Teil der Biegeeinrichtung bilden.

Es ist bevorzugt, dass die Biegeeinrichtung wenigstens einen in zweiter Querrichtung bewegbaren Stempel aufweist.

Es ist bevorzugt, dass die Biegeeinrichtung wenigstens einen ersten Stempel auf einer ersten Seite aufweist, der zum Versetzen eines ersten Teils der Wicklungsköpfe des elastisch zu verbiegenden Wellenwicklungsteils in eine erste der beiden zweiten Querrichtungen ausgebildet ist.

Es ist bevorzugt, dass die Biegeeinrichtung wenigstens einen zweiten Stempel auf einer zweiten Seite aufweist, der zum Versetzen eines zweiten Teils der Wicklungsköpfe des vorzugsweise elastisch zu verbiegenden Wellenwicklungsteils in eine zweite der beiden zweiten Querrichtungen oder auch zum Halten des zweiten Teils der Wicklungsköpfe ausgebildet ist.

Es ist bevorzugt, dass die Führungselemente gruppenweise bewegbar sind.

Es ist bevorzugt, dass die Führungselemente linear bewegbar sind.

Es ist bevorzugt, dass die Führungselemente schwenkend bewegbar sind.

Es ist bevorzugt, dass die Vorrichtung derart ausgebildet ist, dass jeder geradlinige Drahtabschnitt oder zumindest jede Halbwelle mit zwei benachbarten geradlinigen Drahtabschnitten und einem Wicklungskopf dazwischen zu jeder Zeit des Steckvorganges durch wenigstens ein Führungselement geführt wird.

Es ist bevorzugt, dass wenigstens einige der Führungselemente auch in der ersten Querrichtung bewegbar sind.

Eine bevorzugte Ausgestaltung der Vorrichtung umfasst eine elektronische Steuerung, die zum automatischen Steuern der Vorrichtung zur Durchführung des Steckvorganges ausgebildet ist. Die Steuerung kann insbesondere durch Software und/oder Hardware implementiert sein. Die Steuerung kann dezentral an der Vorrichtung vorgesehen sein oder Teil eines Steuersystems einer größeren Industrieanlage, wie z.B. einer Herstellungsanlage zum Herstellen eines Bauteils einer elektrischen Maschine sein. Vorzugsweise ist die Vorrichtung dazu konzipiert in einer derartigen Herstellungsanlage integriert zu werden.

Gemäß einem weiteren Aspekt schafft die Erfindung ein Verfahren zum Herstellen einer gesteckten Wellenwicklung, die zum Bilden wenigstens eines Teils einer Spulenwicklung für ein Bauteil einer elektrischen Maschine ausgebildet ist, durch Zusammenstecken eines ersten Wellenwicklungsteils mit einem zweiten Wellenwicklungsteil, wobei der erste Wellenwicklungsteil durch wenigstens einen ersten Wellenwicklungsdraht gebildet ist und der zweite Wellenwicklungsteil durch wenigstens einen zweiten Wellenwicklungsdraht gebildet ist, wobei sich die Wellenwicklungsdrähte jeweils in eine Längsrichtung erstrecken und sich in einer im Wesentlichen quer zur Längsrichtung verlaufenden ersten Querrichtung erstreckende geradlinige Drahtabschnitte und dachförmige Wicklungsköpfe dazwischen derart aufweisen, dass benachbarte geradlinige Drahtabschnitte durch einen dachförmig gebogenen Wicklungskopf miteinander verbunden sind, wobei das Verfahren umfasst:
Bereitstellen des ersten Wellenwicklungsteils und von ersten Führungselementen zum Führen geradliniger Drahtabschnitte des ersten Wellenwicklungsteils während des Steckvorganges, Bereitstellen des zweiten Wellenwicklungsteils und von zweiten Führungselementen zum Führen geradliniger Drahtabschnitte des zweiten Wellenwicklungsteils während des Steckvorganges, Biegen von Teilbereichen wenigstens einer der Wellenwicklungsteile derart, dass einer oder mehrere der zu dem anderen Wellenwicklungsteil gerichteten Wicklungsköpfe in einer zweiten Querrichtung, die sich im Wesentlichen quer zu der Längsrichtung und quer zu der ersten Querrichtung erstreckt, zum Ineinanderstecken der Wellenwicklungsteile versetzt werden, und Ineinanderschieben des ersten und des zweiten Wellenwicklungsteils der Wellenwicklung unter Führung mit den Führungselementen, um so die Wellenwicklungsteile ineinander zu stecken, wobei die ersten und zweiten Führungselemente zum Passieren von Wicklungsköpfen im Zuge des Ineinandersteckens von einer Führungsstellung, in der sie die geradlinigen Drahtabschnitte führen, in eine Freigabestellung zum Freigeben des Weges der Wicklungsköpfe bewegt werden.

Bei einer besonders bevorzugten Ausgestaltung des Verfahrens erfolgt das Biegen elastisch. Aber auch ein unelastisches Biegen, z.B. mit anschließendem Zurückbiegen, ist möglich.

Vorzugsweise umfasst das Verfahren den Schritt:
Führen der Bewegung wenigstens eines der Wellenwicklungsteile beim Ineinanderstecken mit primären Führungselementen, die sich von einer Seite aus in das zu führende Wellenwicklungsteil erstrecken, und sekundären Führungselementen, die sich von der anderen Seite aus in das zu führende Wellenwicklungsteil erstrecken, wobei die primären und sekundären Führungselemente zu unterschiedlichen Zeiten des Steckvorganges in die Freigabestellung überführt werden, so dass permanent eine Führung vorgesehen ist.

Vorzugsweise umfasst das Verfahren den Schritt:
Führen der Bewegung wenigstens eines der Wellenwicklungsteile beim Ineinanderstecken mit den ersten und zweiten Führungselementen als primäre Führungselemente und zusätzlich mit sekundären Führungselementen, wobei die primären und sekundären Führungselemente zu unterschiedlichen Zeiten des Steckvorganges in die Freigabestellung überführt werden, so dass permanent eine Führung vorgesehen ist.

Vorzugsweise umfasst das Verfahren den Schritt:
Führen der Bewegung wenigstens eines der Wellenwicklungsteile beim Ineinanderstecken mit vorderen Führungselementen, die sich näher an dem anderen Wellenwicklungsteil befinden, und hinteren Führungselementen, die sich weiter entfernt von dem anderen Wellenwicklungsteil befinden, wobei die vorderen und hinteren Führungselemente zu unterschiedlichen Zeiten des Steckvorganges in die Freigabestellung überführt werden.

Es ist bevorzugt, dass jeder geradliniger Drahtabschnitt oder zumindest jede Halbwelle mit zwei benachbarten geradlinigen Drahtabschnitten und einem Wicklungskopf dazwischen zu jeder Zeit des Steckvorganges durch wenigstens ein Führungselement geführt wird.

Vorzugsweise umfasst das Verfahren den Schritt:
a) Bereitstellen von Einzeldrähten oder Teilmatten als erster Wellenwicklungsteil und zweiter Wellenwicklungsteil, so dass der erste und der zweite Wellenwicklungsteil in der ersten Querrichtung nebeneinander liegen und mit ihren Längsrichtungen zueinander ausgerichtet sind. Vorzugsweise umfasst das Verfahren den Schritt:
b) Anheben oder Absenken eines ersten Teils oder einer ersten Hälfte der Wicklungsköpfe des ersten Wellenwicklungsteils.

Bei einer Ausgestaltung des Verfahrens kann ein zweiter Teil oder eine zweite Hälfte der Wicklungsköpfe des ersten Wellenwicklungsteils je nach Steckvorgang stationär gehalten werden oder auch in die entgegengesetzte Richtung wie der erste Teil bewegt werden. Optional enthält das Verfahren somit den Schritt:
c) Absenken oder Anheben oder in Position Halten eines zweiten Teils oder einer zweiten Hälfte der Wicklungsköpfe des ersten Wellenwicklungsteils.

Vorzugsweise umfasst das Verfahren den Schritt:
d) Einschieben des zweiten Wellenwicklungsteils in der ersten Querrichtung in den ersten Wellenwicklungsteil.

Vorzugsweise umfasst das Verfahren den Schritt:
e) Freigeben des jeweiligen gebogenen Teils des ersten Wellenwicklungsteils, so dass sich dieser wieder in Richtung seiner Ausgangsstellung zurückbewegt oder Zurückbewegen des jeweiligen gebogenen Teils des ersten Wellenwicklungsteils in Richtung seiner Ausgangsstellung.

Vorzugsweise umfasst das Verfahren den Schritt:
f) Halten des ersten Wellenwicklungsteils und Führen der Bewegung des zweiten Wellenwicklungsteils mit den Führungselementen, vorzugsweise derart, dass sie lediglich beim Passieren eines Wicklungskopfes in eine Freigabestellung bewegt werden.

Vorzugsweise umfasst das Verfahren den Schritt:
g) Führen des zu führenden Wellenwicklungsteils mit mehreren Reihen von Stiften, die in einer Richtung bewegbar sind, von der wenigstens eine Richtungskomponente entlang der Mittelachse des Stiftes verläuft.

Bei einem bevorzugten Ausführungsbeispiel des Verfahrens werden nacheinander die Schritte a), b), d), e) durchgeführt. Optional kann, vorzugsweise gleichzeitig mit Schritt b) oder unmittelbar davor oder danach Schritt c) durchgeführt werden.

Vorzugsweise umfasst das Verfahren den Schritt:
Ausrichten wenigstens eines der Wellenwicklungsteile oder der gesteckten Wellenwicklungsmatte durch Bewegen wenigstens einiger der Führungselemente in der ersten Querrichtung.

Gemäß einem weiteren Aspekt schafft die Erfindung ein Computerprogramm, umfassend Befehle, die bewirken, dass die Vorrichtung nach einer der voranstehenden Ausgestaltungen die Verfahrensschritte des Verfahrens nach einer der voranstehenden Ausgestaltung ausführt.

Bei bevorzugten vorteilhaften Ausgestaltungen der Erfindung erfolgt eine Führung. Vorzugsweise erfolgt ein automatisierter und prozesssicherer Steckvorgang.

Erfindungsgemäß werden Vorrichtungen und Verfahren geschaffen, mit denen sich gesteckte Wellenwicklungsmatten automatisiert und prozesssicher herstellen lassen. Insbesondere sind Führungselement zur Führung von Teilen zu steckender Wellenwicklungsteile vorgesehen, die sich vorteilhaft vorzugsweise automatisiert und computerimplementiert gesteuert bewegen.

Bei bevorzugten Ausgestaltungen erfolgt nur eine elastische und keine plastische Verformung eines oder beider zusammenzusteckender Teile der Wellenwicklung.

Im Gegensatz zu diesen besonders bevorzugten Ausgestaltungen des Verfahrens und der Vorrichtung zur Herstellung gesteckter Wellenwicklungsmatten werden bei der Literaturstellt [3] die Drähte plastisch verformt, nämlich um 90° nach oben gebogen, sodass die Teilmatte / Drähte die "eingesteckt" werden sollen, von oben eingelegt werden können. Eine plastische Verformung der Drähte ist zwar prinzipiell auch bei einigen Ausführungsformen der Erfindung möglich, ist jedoch weniger bevorzugt, da sich je nach Umfang der plastischen Verformung ein relativ großes Beschädigungspotential an der Isolierung bei den Biegestellen ergibt. Auch besteht die Möglichkeit einer bleibenden Verformung, die für nachfolgende Prozesse von Nachteil sind. Daher sind bei bevorzugten Ausgestaltungen die Biegeeinrichtung bzw. das Biegen derart ausgebildet, dass die zu biegenden Teile der Wellenwicklungsteile elastisch gebogen werden. Entlastet man die gebogenen Teile, beispielsweise durch Rückführen von Stempeln oder dergleichen, biegen sich die elastisch gebogenen Teile wieder in ihre Ausgangsform zurück.

Das grundsätzliche Steckprinzip, welches auch bei Ausführungsformen der Erfindung durchgeführt werden kann, ist in der Literaturstelle [1] (WO2019166060) beschrieben und in den dort wieder gegebenen Figuren gezeigt. Es wird für weitere Einzelheiten, auch für mögliche Ausführungen der Wellenwicklungsteile und der Wellenwicklungsdrähte, ausdrücklich auf diese Literaturstelle [1] verwiesen, die durch Bezugnahme inkorporiert wird und Teil der hiesigen Offenbarung darstellt. Die Literaturstelle [1] hat aber keinerlei Führungen, und es ist offen gelassen, wie ein Steckvorgang automatisiert werden könnte.

Vorteilhafte Ausgestaltungen der Erfindung ermöglichen ein Steckprinzip mit vorzugsweise elastischem "Verbiegen" (z.B. Anheben oder alternativ auch Absenken, je nach Orientierung der Vorrichtung auch Bewegungen in andere Richtungen) der Drähte, wobei die Drähte vorzugsweise zu jedem Zeitpunkt geführt werden.

Da die Drähte der Wellenwicklung eine Vielzahl an Biegungen aufweisen, kann ein Rückfedereffekt nach dem 2D Biegen entstehen, der dazu führt, dass die Drähte nicht an definierten Positionen verharren. Um Drahtkreuzungen und Beschädigungen zu vermeiden und einen stabilen Prozess zu gewährleisten, ist es bei vorteilhaften Ausgestaltungen vorgesehen, dass die Drähte zu jedem Zeitpunkt geführt werden; auch während des Steckvorgangs.

Beim Stand der Technik müssen beim Steckvorgang die Drähte seitlich verschoben werden, wenn die Drähte nur elastisch angehoben werden. Hierbei würden sich allerdings Führungen mit der gebogenen "Dachgeometrie" des Drahtes kreuzen. Der Steckvorgang ist mit feststehenden Führungen so nicht möglich.

Vorteilhafte Ausgestaltungen der Erfindung ermöglichen dagegen einen prozesstechnisch sicheren, auch automatisierbaren Steckvorgang der zusammenzusteckenden Teile einer gesteckten Wellenwicklung.

Bei erfindungsgemäßen Vorrichtungen und Verfahren sind bewegliche Führungen zum Führen wenigstens eines der Teile der Wellenwicklung beim Steckvorgang vorgesehen.

Bevorzugte Ausgestaltungen bieten insbesondere einen oder mehrere oder alle der folgenden Vorteile:
- automatisierbarer Steckvorgang
- sichere Prozessführung
- Führung der Teile durch bewegliche Führungen, die sich beim Stecken aus dem Weg der zu steckenden Teile bewegen können
- vorzugsweise keine plastische Verformung der Drähte
- weniger Beschädigungspotential der Isolierung
- keine bleibende Verformung
- stabilere Nachfolgeprozesse

Ausführungsbeispiele der Erfindung werden im Folgenden anhand der beigefügten Zeichnungen näher erläutert. Darin zeigt:
Fig. 1 eine perspektivische Ansicht einer Anordnung aus einem ersten Wellenwicklungsteil und einem zweiten Wellenwicklungsteil zur Verdeutlichung eines ersten Schritts eines Verfahrens gemäß einer bevorzugten Ausführungsform zum Herstellen einer gesteckten Wellenwicklungsmatte durch Zusammenstecken der Wellenwicklungsteile;
Fig. 2 eine Seitenansicht der Anordnung von Fig. 1;
Fig. 3 eine perspektivische Ansicht vergleichbar Fig. 1 zur Verdeutlichung eines zweiten Schritts des Verfahrens;
Fig. 4 eine Seitenansicht der Anordnung von Fig. 3;
Fig. 5 eine perspektivische Ansicht vergleichbar Fig. 3 zur Verdeutlichung eines dritten Schritts des Verfahrens;
Fig. 6 eine Seitenansicht der Anordnung von Fig. 5;
Fig. 7 eine perspektivische Ansicht vergleichbar Fig. 5 zur Verdeutlichung eines vierten Schritts des Verfahrens;
Fig. 8 eine Seitenansicht der Anordnung von Fig. 7;
Fig. 9 eine perspektivische Ansicht der durch Zusammenstecken des ersten Wellenwicklungsteils und des zweiten Wellenwicklungsteils mit den Schritten gemäß Fig. 1 bis 8 hergestellten gesteckten Wellenwicklungsmatte;
Fig. 10 eine Ansicht der Wellenwicklungsmatte entlang der Linie A-A von Fig. 9;
Fig. 11 eine perspektivische Ansicht eines Teils einer Ausführungsform einer Vorrichtung zum Herstellen einer gesteckten Wellenwicklungsmatte durch Zusammenstecken von Wellenwicklungsteilen;
Fig. 12 eine schematische Übersichtsdarstellung einer Ausführungsform der Vorrichtung von der Seite gesehen bei einem ersten Schritt einer bevorzugten Ausführungsform des Verfahrens zum Herstellen der gesteckten Wellenwicklungsmatte;
Fig. 13 bis 25 eine Ansicht der Vorrichtung vergleichbar Fig. 12 bei einem zweiten bis fünfzehnten Schritt des Verfahrens.

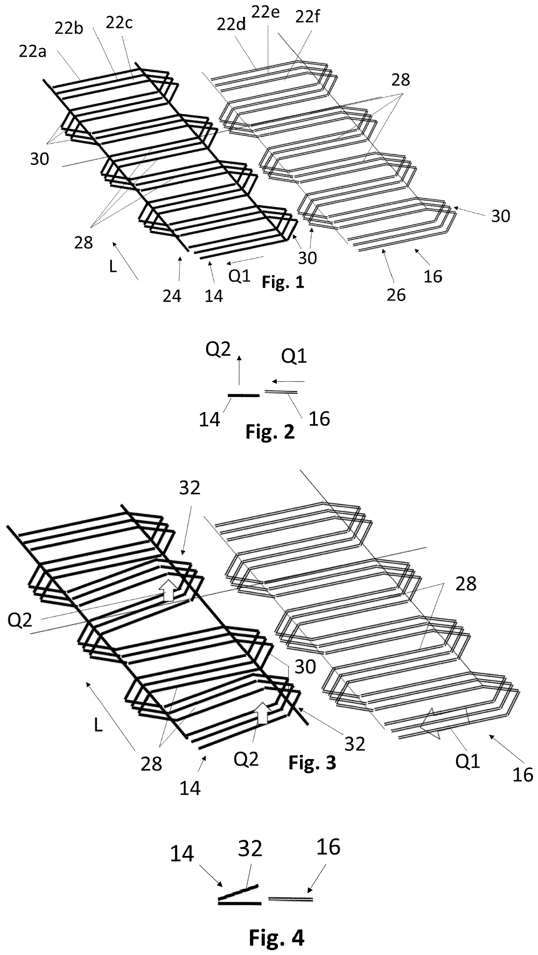

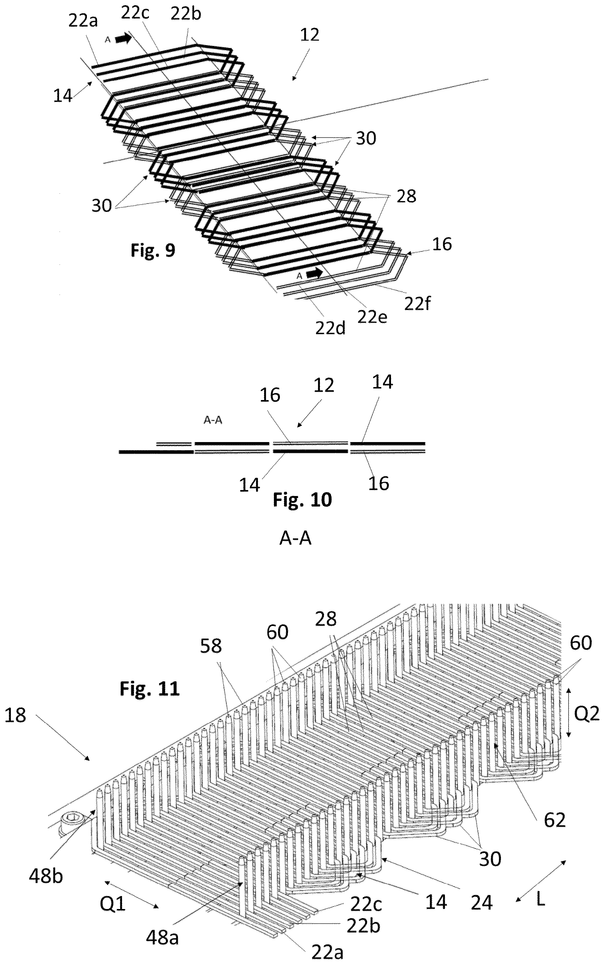

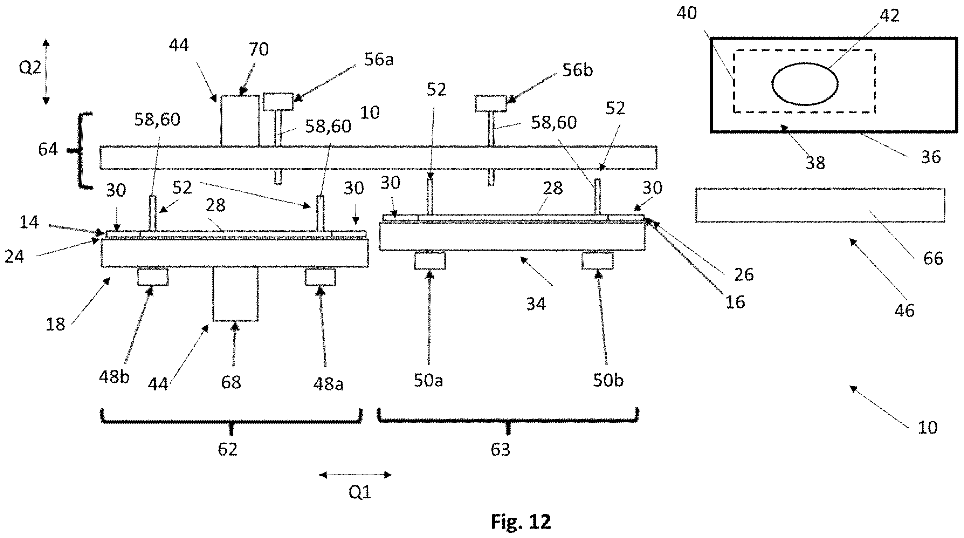

Im Folgenden werden bevorzugte Ausführungsformen eines Verfahrens und einer Vorrichtung 10 zum Herstellen einer gesteckten Wellenwicklung 12 anhand der Darstellungen in den beigefügten Figuren näher erläutert. Dabei zeigen die Fig. 1 bis 10 schematische Darstellungen einer Anordnung aus einem ersten Wellenwicklungsteil 14 und einem zweiten Wellenwicklungsteil 16 bei verschiedenen Schritten des Verfahrens, in dem die Wellenwicklungsteile 14, 16 zum Bilden der gesteckten Wellenwicklung 12 zusammengesteckt werden. Die Fig. 11 zeigt eine perspektivische Ansicht einer ersten Aufnahme 18 der Vorrichtung 10; und die Fig. 12 bis 25 zeigen schematische Darstellungen der Vorrichtung 10 in Seitenansicht während unterschiedlicher Schritte einer besonders bevorzugten Ausführungsform des Verfahrens.

Die Figuren zeigen ein Verfahren und eine Vorrichtung 10 zum Herstellen einer gesteckten Wellenwicklung 12, die zum Bilden wenigstens eines Teils einer Spulenwicklung für ein Bauteil einer elektrischen Maschine ausgebildet ist.

Insbesondere ist die Wellenwicklung 12 durch eine durch Stecken hergestellte Wellenwicklungsmatte 20 gebildet, die aus mehreren Wellenwicklungsdrähten 22, 22a-22f zusammengesetzt ist.

Die Wellenwicklung 12 wird durch Zusammenstecken eines ersten Wellenwicklungsteils 14 mit einem zweiten Wellenwicklungsteil 16 hergestellt.

Der erste Wellenwicklungsteil 14 ist durch wenigstens einen ersten Wellenwicklungsdraht 22a-22c gebildet. Zum Beispiel kann der erste Wellenwicklungsteil 14 durch eine Gruppe von ersten Wellenwicklungsdrähten 22a-22c gebildet sein, die bereits zu einer ersten Teilmatte 24 zusammengesetzt sind.

Der zweite Wellenwicklungsteil 16 ist durch wenigstens einen zweiten Wellenwicklungsdraht 22d-22f gebildet. Zum Beispiel kann der zweite Wellenwicklungsteil 16 durch eine Gruppe von zweiten Wellenwicklungsdrähten 22d-22f gebildet sein, die bereits zu einer zweiten Teilmatte 26 zusammengesetzt sind.

Die Wellenwicklungsdrähte 22a-22f erstrecken sich jeweils in eine Längsrichtung L. Die Wellenwicklungsdrähte 22a-22f weisen geradlinige Drahtabschnitte 28 auf, die sich in einer im Wesentlichen quer zur Längsrichtung L verlaufenden ersten Querrichtung Q1 erstrecken. Die Wellenwicklungsdrähte 22a-22f weisen dachförmige Wicklungsköpfe 30 zwischen den geradlinigen Drahtabschnitten derart auf, dass benachbarte geradlinige Drahtabschnitte 28 durch einen dachförmig gebogenen Wicklungskopf 30 miteinander verbunden sind. Bei einem beispielhaften späteren bestimmungsgemäßen Gebrauch der Wellenwicklung 12 in einem Stator eines Elektromotors erstrecken sich die Wellenwicklungsdrähte mit ihrer Längsrichtung L in Umfangsrichtung und die geradlinigen Drahtabschnitte 28 erstrecken sich im Wesentlichen in axialer Richtung (bezogen auf die Achse des Stators/Elektromotors).

Im Folgenden wird anhand der Darstellungen in den Fig. 1 bis 10 der grundsätzliche Ablauf des Steckvorgangs näher erläutert. Zunächst werden, wie in Fig. 1 und 2 dargestellt, das erste Wellenwicklungsteil 14 und das zweite Wellenwicklungsteil 16 bereitgestellt. Als Wellenwicklungsteile 14, 16 können Einzeldrähte - Wellenwicklungsdrähte 22a-22f - oder Teilmatten 24, 26 bereitgestellt werden. In den Fig. 1 bis 10 wird ein mögliches Beispiel des Steckvorganges mit zwei Teilmatten 24, 26 gezeigt, analog kann der Steckvorgang auch mit Einzeldrähten erfolgen. Es wird ein Beispiel eines Steckvorganges von Teilmatten 24, 26 mit einer möglichen Lageänderung gezeigt, die Lageänderung kann aber Fauch in verschiedenen Mustern erfolgen, wie dies im Einzelnen in der Literaturstelle [1], auf die für weitere Einzelheiten ausdrücklich verwiesen wird, dargestellt und beschrieben ist.

Gemäß Fig. 1 und 2 werden die Wellenwicklungsteile 14, 16 nebeneinander liegend bereitgestellt, so dass sie sich nebeneinander im Wesentlichen parallel in Längsrichtung erstrecken und in der ersten Querrichtung Q1 seitlich beabstandet zueinander angeordnet sind.

Gemäß Fig. 3 und 4 werden dann Teilbereiche 32 des ersten Wellenwicklungsteils 14 in eine quer zu der Längsrichtung L und der ersten Querrichtung Q1 verlaufende zweite Querrichtung Q2 ausgelenkt. Das Auslenken erfolgt vorzugsweise elastisch. Bei den gezeigten Ausführungsbeispielen werden die Wellenwicklungsteile 14, 16 mit ihrer Längsrichtung L in einer horizontalen Richtung verlaufend derart bereitgestellt, dass sich deren geradlinige Drahtabschnitte 28 in der anderen horizontalen Richtung als erste Querrichtung Q1 erstrecken. Der Teilbereich 32 wird dann beispielsweise angehoben, d.h. die zweite Querrichtung Q2 ist in den dargestellten Ausführungsbeispielen die vertikale Richtung. Der Teilbereich 32 weist bei dem gezeigten Ausführungsbeispiel einen Teil, z.B. jeden zweiten, der nahe dem zweiten Wellenwicklungsteil 16 liegenden Wicklungsköpfe 30 des ersten Wellenwicklungsteils 14 auf. Der Teilbereich 32 kann je nach Lageänderungsmuster auch durch eine andere Gruppe der nahe dem zweiten Wellenwicklungsteil 16 angeordneten Wicklungsköpfe 30 gebildet sein. Demgemäß zeigen Fig. 3 und 4 einen Schritt des Biegens, vorzugsweise elastischen Biegens, von Teilbereichen 32 wenigstens einer 14 der Wellenwicklungsteile 14, 16 derart, dass einer oder mehrere der zu dem anderen Wellenwicklungsteil 16 gerichteten Wicklungsköpfe 30 in einer zweiten Querrichtung Q2, die sich im Wesentlichen quer zu der Längsrichtung L und quer zu der ersten Querrichtung Q1 erstreckt, zum Ineinanderstecken der Wellenwicklungsteile 14, 16 versetzt werden.

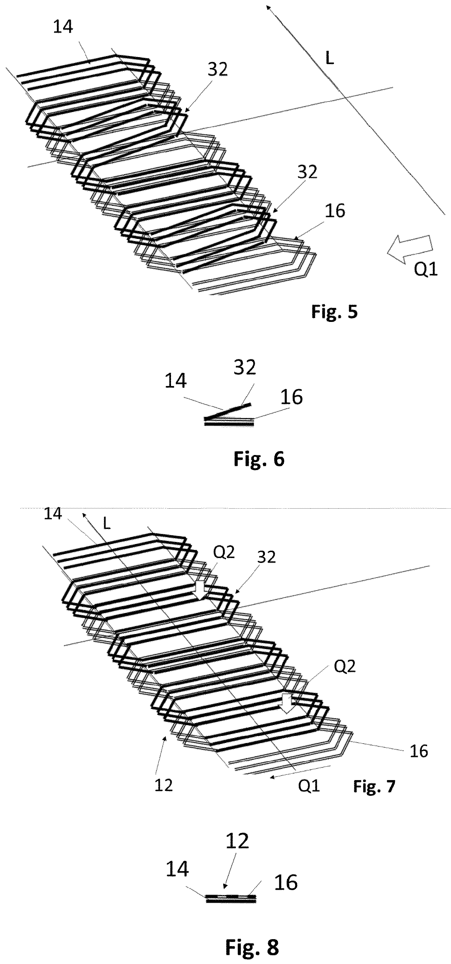

Gemäß den Fig. 5 und 6 werden dann die Wellenwicklungsteile 14, 16 ineinander geschoben. Z.B. wird das zweite Wellenwicklungsteil 16 seitlich in den ersten Wellenwicklungsteil 14, bei dem der Teilbereich 32 der Wicklungsköpfe 30 angehoben ist, eingeschoben. Insbesondere zeigen die Fig. 5 und 6 eine Ausführungsform des Schritts des Ineinanderschiebens des ersten und des zweiten Wellenwicklungsteils 14, 16 der Wellenwicklung, um so die Wellenwicklungsteile ineinander zu stecken. Die Relativbewegung der Wellenwicklungsteile 14, 16 erfolgt insbesondere im Wesentlichen in der ersten Querrichtung Q1 (auch Schrägbewegung möglich).

Gemäß den Fig. 7 und 8 wird anschließend der erste Wellenwicklungsteil 14 abgelegt. Insbesondere wird der in die zweite Querrichtung Q2 versetzte Teilbereich 32 des ersten Wellenwicklungsteils 14 wieder in seine Ausgangslage in Richtung der zweiten Querrichtung Q2 gebracht. Erfolgte das Biegen - wie bevorzugt - elastisch, wird einfach eine hierzu auferlegte Biegekraft gelöst, so dass sich der Teilbereich 32 wieder elastisch zurückbewegt. Erfolgte ein Biegen im plastischen Bereich, wird eine Gegenkraft zum Zurückbiegen aufgebracht.

Die Fig. 9 und 10 zeigen dann die durch den Steckvorgang gemäß den Fig. 1 bis 8 hergestellte gesteckte Wellenwicklung 12 in Form der Wellenwicklungsmatte 20, die sich in Längsrichtung L erstreckt, wobei die geradlinigen Drahtabschnitte 28 der einzelnen zusammengesteckten Wellenwicklungsdrähte 22a-22f in die erste Querrichtung Q1 weisen. Diese Wellenwicklung 12 kann dann als Spulenwicklung für ein Bauteil einer elektrischen Maschine (nicht dargestellt) verwendet werden. Beispielsweise wird die Wellenwicklung 12 in ein Blechpaket eines Stators eingebracht, wobei die geradlinigen Drahtabschnitte 28 in Nuten des Blechpaktes eingeführt werden.

Im Folgenden werden Ausführungsformen von Verfahren und Vorrichtungen 10 anhand der Darstellung der Fig. 11 bis 25 näher erläutert, mit denen sich der zuvor vom Grundaufbau her anhand der Fig. 1 bis 10 erläuterte Steckvorgang leicht und prozesssicher automatisieren lässt.

Wie insbesondere in Fig. 11 dargestellt, weist die Vorrichtung 10 eine erste Aufnahme 18 zum Aufnehmen des ersten Wellenwicklungsteils 14 und eine in Fig. 11 nicht dargestellte, aber analog (insbesondere komplementär oder spiegelbildlich) ausgebildete zweite Aufnahme 34 zum Aufnehmen des zweiten Wellenwicklungsteils 16 auf.

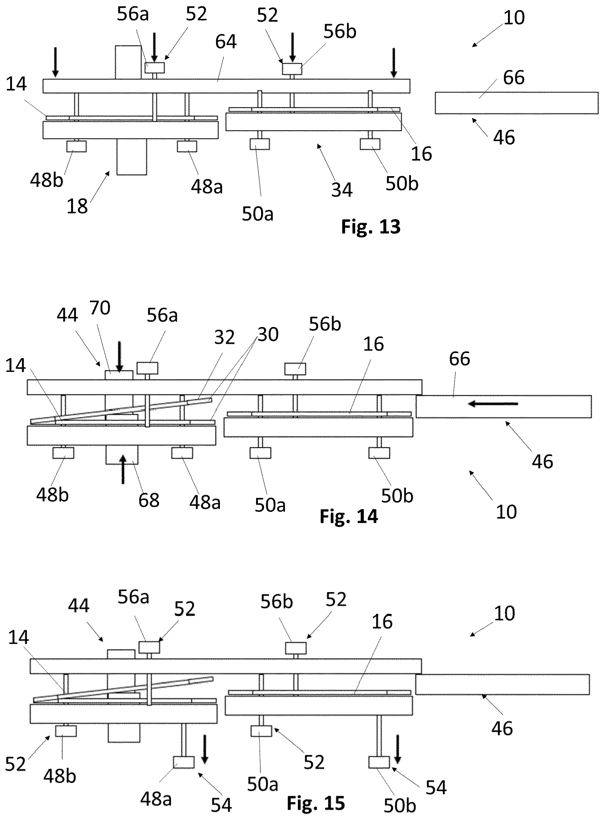

Fig. 12 zeigt eine schematische Übersicht eines Ausführungsbeispiels der Vorrichtung 10 beim Schritt des Bereitstellens des ersten und zweiten Wellenwicklungsteils 14, 16. In den Fig. 13 bis 25 ist die Vorrichtung 10 bei der Durchführung weiterer Schritte des Verfahrens gezeigt.

Wie in Fig. 12 angedeutet, weist die Vorrichtung 10 eine elektronische Steuerung 36 auf, die zum Ansteuern der Vorrichtung 10 zum Durchführen dieser Schritte ausgebildet ist. Die elektronische Steuerung 36 kann in Hardware und/oder in Software implementiert sein. Insbesondere weist die elektronische Steuerung 36 eine elektronische Datenverarbeitungseinheit 38 auf, in deren Speicher 40 ein Computerprogramm 42 mit maschinenlesbaren Anweisungen auf, die die Vorrichtung 10 dazu veranlassen, die Schritte des Verfahren, wie sie im Folgenden anhand der Fig. 12 bis 25 noch näher erläutert werden, durchzuführen. Hierzu sind bewegliche Elemente - d.h. insbesondere Führungselemente 48a, 48b, 50a, 50b, 56a, 56b, Schieber 66 und Stempel 68, 70, Elemente zum Bewegen von Vorrichtungsteilen wie Aufnahmen 18, 34 und Deckel 64 - der Vorrichtung 10 jeweils durch nicht näher dargestellte Aktoren betätigbar, die durch die Steuerung 36 ansteuerbar sind. Die Aktoren können z.B. elektrische, hydraulische, pneumatische Aktoren sein. Insbesondere können auch Gruppen von beweglichen Elementen, die gemeinsam zu bewegen sind, durch einen gemeinsamen Aktor angetrieben werden, bei anderen Ausgestaltungen ist für jedes Element ein Aktor vorgesehen, wobei Gruppen von Aktoren durch die Steuerung 36 zur gemeinsamen Bewegung angesteuert werden können, um Gruppen von beweglichen Elementen der Vorrichtung gemeinsam zu bewegen.

Zunächst wird anhand der Fig. 11 und 12 der weitere Aufbau eines bevorzugten Ausführungsbeispiels der Vorrichtung 10 näher erläutert, bevor anhand der Fig. 13 bis 25 der Ablauf des Verfahrens erläutert wird.

Die Vorrichtung 10 ist zum Herstellen der gesteckten Wellenwicklung 12, die zum Bilden wenigstens eines Teils einer Spulenwicklung für ein Bauteil einer elektrischen Maschine ausgebildet ist, durch Zusammenstecken des ersten Wellenwicklungsteils 14 mit dem zweiten Wellenwicklungsteil 16 eingerichtet. Wie oben bereits erläutert, ist der erste Wellenwicklungsteil 14 durch wenigstens einen ersten Wellenwicklungsdraht 22a-22c gebildet, und der zweite Wellenwicklungsteil 16 ist durch wenigstens einen zweiten Wellenwicklungsdraht 22d-22f gebildet. Wie oben bereits erläutert, weisen die Wellenwicklungsdrähte 22a-22f die geradlinigen Drahtabschnitte 28, die sich in einer im Wesentlichen quer zur Längsrichtung L der Wellenwicklungsteile 14, 16 verlaufenden ersten Querrichtung Q1 erstrecken, und die dachförmigen Wicklungsköpfe 30 dazwischen derart auf, dass benachbarte geradlinige Drahtabschnitte 28 durch einen dachförmig gebogenen Wicklungskopf 30 miteinander verbunden sind.

Die Vorrichtung 10 umfasst die erste Aufnahme 18, die zweite Aufnahme 34, eine Biegeeinrichtung 44 und eine Relatiwerschiebungseinrichtung 46.

Die erste Aufnahme 18 ist zum Aufnehmen des ersten Wellenwicklungsteils 14 ausgebildet. Die erste Aufnahme weist erste Führungselemente 48a, 48b zum Führen geradliniger Drahtabschnitte 28 des ersten Wellenwicklungsteils 14 auf.

Die zweite Aufnahme 34 ist zum Aufnehmen des zweiten Wellenwicklungsteils 16 ausgebildet. Die zweite Aufnahme 34 weist zweite Führungselemente 50a, 50b zum Führen geradliniger Drahtabschnitte 28 des zweiten Wellenwicklungsteils 16 auf.

Die Biegeeinrichtung 44 ist zum Biegen, insbesondere zum elastischen Biegen, der Teilbereiche 32 wenigstens einer 14 der Wellenwicklungsteile 14, 16 ausgebildet. Insbesondere ist die Biegeeinrichtung 44 derart ausgebildet, dass einer oder mehrere der zu dem anderen Wellenwicklungsteil 16 gerichteten Wicklungsköpfe 30 in der zweiten Querrichtung Q2, die sich im Wesentlichen quer zu der Längsrichtung L und quer zu der ersten Querrichtung Q1 erstreckt, durch Biegen versetzt werden, um das Ineinanderstecken der Wellenwicklungsteile 14, 16 zu ermöglichen.

Die Relatiwerschiebungseinrichtung 46 ist zum Ineinanderschieben des ersten und des zweiten Wellenwicklungsteils 14, 16 der Wellenwicklung 12 ausgebildet, um so die Wellenwicklungsteile 14, 16 ineinander zu stecken.

Die ersten Führungselemente 48a, 48b und/oder die zweiten Führungselemente 50a, 50b sind zwischen einer Führungsstellung 52 und einer Freigabestellung 54 bewegbar.

In der Führungsstellung 52 sind die Führungselemente 48a, 48b, 50a, 50b derart angeordnet, dass sie die zugeordneten geradlinigen Drahtabschnitte 28 im Zuge des Ineinandersteckens führen.

In der Freigabestellung 54 geben die Führungselemente 48a, 48b, 50a, 50b den Weg von Wicklungsköpfen 30 im Zuge des Ineinandersteckens frei.

Die Vorrichtung 10 gemäß der dargestellten Ausführungsform weist neben primären ersten und zweiten Führungselementen 48a, 48b, 50a, 50b, die sich durch Bewegung im Wesentlichen in der einen der beiden zweiten Querrichtungen Q2 aus der Führungsstellung 52 in die Freigabestellung bewegen können, auch sekundäre Führungselemente 56a, 56b auf, die sich durch Bewegung im Wesentlichen in die Gegenrichtung - die andere der beiden zweiten Querrichtungen Q2 von der Führungsstellung 52 in die Freigabestellung 54 bewegen können. Diese gegenläufige Bewegung der primären und sekundären Führungselemente 48a, 48b, 50a, 50b, 56a, 56b ist nur eine optionale Ausbildung. Bei anderen nicht näher dargestellten Ausführungsformen der Vorrichtung 10 greifen sowohl die primären Führungselemente 48a, 48b, 50a, 50b, als auch einige oder alle der sekundären Führungselemente 56a, 56b von der gleichen Seite aus ein und/oder sind durch Bewegungen in die gleiche Richtung von der Führungsstellung 52 in die Freigabestellung 54 bewegbar.

Als Führungselemente 48a, 48b, 50a, 50b, 56a, 56b können beliebige Führungen dienen, die die vorgenannten Funktionen erfüllen. Z.B. können Vorsprünge 58 in Form von Stiften 60, Blechen, Scheiben, Keilen, gabelförmigen Ausbildungen, Nutbegrenzungen mit einer Führungsnut dazwischen usw. in der Führungsstellung 52 links und rechts des zu führenden geradlinigen Drahtabschnittes 28 angeordnet sein und in der Freigabestellung 54 aus dem Eingriff zwischen geradlinigen Drahtabschnitten 28 zurückgezogen sein.

Bei den dargestellten Ausführungsbeispielen weisen die Aufnahmen 18, 34 als Führungselemente 48a, 48b, 50a, 50b, 56a, 56b jeweils Reihen von Stiften 60 (auch Pins genannt) auf, die mittels zugeordneter, durch die Steuerung 36 angesteuerter, hier nicht dargestellter Aktoren einzeln oder in Gruppen in ihrer Längsrichtung (die sich hier im Wesentlichen in die zweite Querrichtung Q2 erstreckt) beweglich sind. So können die die primären ersten Führungselemente 48a, 48b der ersten Aufnahme 18 darstellenden Stifte 60 in die in Fig. 11 dargestellte Führungsstellung 52 bewegt werden und aus dieser Führungsstellung 52 hier nach unten in die Freigabestellung 54 überführt werden. Fig. 11 zeigt die erste Aufnahme 18 und die erste Teilmatte 24 als Beispiel des ersten Wellenwicklungsteils 14, wobei die ersten Führungselemente 48a, 48b alle in der Führungsstellung 52 dargestellt sind. Die erste Aufnahme 18 ist hier als erste kammartige Struktur oder erster Rechen 62 mit einer ersten Reihe von Stiften 60 und einer zweiten Reihe von Stiften 60 ausgebildet. Die erste Reihe von Stiften 60 ist ein Beispiel von vorderen ersten Führungselementen 48a, während die zweite Reihe von Stiften 60 ein Beispiel von hinteren ersten Führungselementen 48b darstellt. Entsprechend ist auch die zweite Aufnahme 34 als zweiter Rechen 63 mit einer ersten Reihe von Stiften 60 und einer zweiten Reihe von Stiften ausgebildet, die Beispiele für vordere und hintere zweite Führungselemente 50a, 50b sind, so dass auch die zweiten Führungselemente 50a, 50b vordere zweite Führungselemente 50a und hintere zweite Führungselemente 50b aufweisen, siehe Fig. 12.

Wie in Fig. 12 weiter dargestellt, greifen die ersten Führungselemente 48a, 48b der ersten Aufnahme 18 als primäre erste Führungselemente 48a, 48b in der Führungsstellung 52 von einer (ersten) Seite aus (hier von unten) sich in zweiter Querrichtung Q2 erstreckend in den ersten Wellenwicklungsteil 14 ein und sind von der Führungsstellung 52 in Richtung auf diese eine Seite zu (d.h. hier nach unten) in die Freigabestellung 54 bewegbar. Weiter greifen die zweiten Führungselemente 50a, 50b der zweiten Aufnahme 34 als primäre zweite Führungselemente 50a, 50b in der Führungsstellung 52 von der einen (ersten) Seite aus (hier von unten) sich in zweiter Querrichtung Q2 erstreckend in den zweiten Wellenwicklungsteil 16 ein und sind von der Führungsstellung 52 in Richtung auf diese eine (erste) Seite zu (d.h. hier nach unten) in die Freigabestellung 54 bewegbar.

Weiter weist die Vorrichtung 10 die sekundären Führungselemente 56a, 56b auf, die ebenfalls zwischen einer Freigabestellung 54 zum Passieren von Wicklungsköpfen 30 beim Ineinanderschieben und einer Führungsstellung 52 zur Führung der geradlinigen Drahtabschnitte 28 bewegbar sind. Sekundäre erste Führungselemente 56a erstrecken sich in der Führungsstellung 52 von der anderen (zweiten) Seite (hier von oben) aus in der zweiten Querrichtung Q2 entgegengesetzt zu den primären ersten Führungselementen 48a, 48b und greifen von dieser anderen Seite aus (hiervon oben) in den ersten Wellenwicklungsteil 14 ein und sind von der Führungsstellung 52 in Richtung auf diese andere Seite zu (hier nach oben) in die Freigabestellung 54 bewegbar. Sekundäre zweite Führungselemente 56b erstrecken sich in der Führungsstellung 52 von der anderen (zweiten) Seite (hier von oben) aus in der zweiten Querrichtung Q2 entgegengesetzt zu den primären zweiten Führungselementen 50a, 50b und greifen von dieser anderen Seite aus (hiervon oben) in den zweiten Wellenwicklungsteil 16 ein und sind von der Führungsstellung 52 in Richtung auf diese andere Seite zu (hier nach oben) in die Freigabestellung 54 bewegbar.

Bei den dargestellten Ausführungsformen weist die Vorrichtung einen Deckel 64 auf, an dem die sekundären Führungselemente 56a, 56b bewegbar gelagert sind. Vorzugsweise sind die Aufnahmen 18, 34 beide oder einzeln relativ zu dem Deckel 64 und/oder relativ zueinander beweglich, insbesondere in der zweiten Querrichtung Q2, d.h. hier z.B. in der Höhenrichtung.

Demnach weist die Vorrichtung 10 vordere Führungselemente 48a, 50a und hintere Führungselemente 48b, 50b auf. Die vorderen Führungselemente 48a, 50a sind zum Angreifen an vorderen Bereichen des zu führenden Wellenwicklungsteils 16, 14 ausgebildet. Als vordere Bereiche werden dabei die in Steckbewegungsrichtung vorne liegenden Bereiche bezeichnet, die dem jeweils anderen Wellenwicklungsteil zugewandt sind. Die hinteren Führungselemente 48b, 50b sind zum Angreifen an (bezüglich der Steckbewegungsrichtung) hinteren Bereichen des jeweils zu führenden Wellenwicklungsteils 16, 14 ausgebildet. Die hinteren Bereiche des einen Wellenwicklungsteils 16, 14 sind von dem anderen Wellenwicklungsteil 14, 16 abgewandt. Die vorderen 48a, 50a und hinteren 48b, 50b Führungselemente sind unterschiedlich zueinander und unabhängig voneinander bewegbar.

Insbesondere weisen die ersten Führungselemente 48a, 48b vordere erste Führungselemente 48a zum Angreifen an dem zweiten Wellenwicklungsteil 16 zugewandten vorderen Bereichen des ersten Wellenwicklungsteils 14 und hintere erste Führungselemente 48b zum Angreifen an hinteren Bereichen des ersten Wellenwicklungsteils 14, die von dem zweiten Wellenwicklungsteil 16 abgewandt sind, auf, wobei die vorderen und hinteren ersten Führungselemente 48a, 48b unterschiedlich zueinander und unabhängig voneinander bewegbar sind. Die zweiten Führungselemente 50a, 50b weisen vordere zweite Führungselemente 50a zum Angreifen an dem ersten Wellenwicklungsteil 14 zugewandten vorderen Bereichen des zweiten Wellenwicklungsteils 16 und hintere zweite Führungselemente 50b zum Angreifen an hinteren Bereichen des zweiten Wellenwicklungsteils 16, die von dem ersten Wellenwicklungsteil 14 abgewandt sind, auf, wobei die vorderen und hinteren zweiten Führungselemente 50a, 50b unterschiedlich zueinander und unabhängig voneinander bewegbar sind.

Die primären Führungselemente 48a, 48b, 50a, 50b weisen vordere primäre Führungselemente 48a, 50a zum Angreifen an dem anderen Wellenwicklungsteil 14, 16 zugewandten vorderen Bereichen des zu führenden Wellenwicklungsteils 16, 14 und hintere primäre Führungselemente 48b, 50b zum Angreifen an hinteren Bereichen des zu führenden Wellenwicklungsteils 16, 14, die von dem anderen Wellenwicklungsteil 14, 16 abgewandt sind, auf, wobei die vorderen 48a, 50a und hinteren 48b, 50b primären Führungselemente unterschiedlich zueinander und unabhängig voneinander bewegbar sind.

Bezogen auf eine Führung des zweiten Wellenwicklungsteils 16 weisen die sekundären Führungselemente 56a, 56b vordere sekundäre Führungselemente 56a zum Angreifen an dem anderen Wellenwicklungsteil 14 zugewandten vorderen Bereichen des zu führenden Wellenwicklungsteils 16 und hintere sekundäre Führungselemente 56b zum Angreifen an hinteren Bereichen des zu führenden Wellenwicklungsteils 16, die von dem anderen Wellenwicklungsteil 14 abgewandt sind, auf, wobei die vorderen 56a und hinteren 56b sekundären Führungselemente unterschiedlich zueinander und unabhängig voneinander bewegbar sind.

Die Relativverschiebungseinrichtung 46 weist wenigstens einen Schieber 66 auf, der dazu ausgebildet ist, eines der Wellenwicklungsteile 14, 16, hier insbesondere das zweite Wellenwicklungsteil 16, in der ersten Querrichtung Q1 in das andere der Wellenwicklungsteile 14, 16, hier insbesondere das erste Wellenwicklungsteil 14, einzuschieben.

Bei der dargestellten Ausführung ist die Biegeeinrichtung 44 zum Verbiegen der Teilbereiche 32 an dem ersten Wellenwicklungsteil 14 ausgebildet. Hierzu weist die Biegeeinrichtung 44 wenigstens einen in zweiter Querrichtung Q2 bewegbaren Stempel 68, 70 auf. Insbesondere weist die Biegeeinrichtung 44 wenigstens einen ersten Stempel 68 auf einer ersten Seite auf, der zum Versetzen eines ersten Teils der Wicklungsköpfe 30 des vorzugsweise elastisch zu verbiegenden Wellenwicklungsteils 14 in eine erste der beiden zweiten Querrichtungen ausgebildet ist. Der erste Stempel 68 ist bei der dargestellten Ausführungsform der ersten Aufnahme 18 zugeordnet und greift durch ein Basisteil der ersten Aufnahme 18 sich zum Biegen von unten nach oben bewegend durch. Die Biegeeinrichtung weist wenigstens einen zweiten Stempel 70 auf einer zweiten Seite auf. Der zweite Stempel 70 ist bei der dargestellten Ausführung an dem Deckel 64 gelagert und lässt sich zum Angreifen an dem ersten Wellenwicklungsteil 14 von oben nach unten bewegen. Der zweite Stempel 70 ist insbesondere dazu ausgebildet, beim Biegen des ersten Teils der Wicklungsköpfe 30 des ersten Wellenwicklungsteils den verbleibenden Teil der Wicklungsköpfe an Position zu halten. Es wären auch Ausführungen denkbar, bei denen der zweite Stempel 70 zum Versetzen eines zweiten Teils der Wicklungsköpfe des elastisch zu verbiegenden Wellenwicklungsteils in eine zweite der beiden zweiten Querrichtungen ausgebildet ist. Dann würde ein erster Teil der Wicklungsköpfe 30 des ersten Wellenwicklungsteils nach oben verbogen werden und ein zweiter Teil nach unten, und der zweite Wellenwicklungsteil 16 würde zwischen die ausgelenkten Teile des ersten Wellenwicklungsteils eingeschoben.

Die Stempel 68, 70 können unterschiedlich ausgebildet sein und sind in den Zeichnungen nur schematisch dargestellt. Beispielsweise kann jeder Stempel entsprechend dem Muster des zu verbiegenden Teilbereichs 32 eine Reihe von Vorsprüngen aufweisen, die die entsprechenden Wicklungsköpfe beaufschlagen, und durch eine gemeinsame Basisstruktur bewegt werden. Auch kann eine Reihe von Stempeln mit zugeordnetem Aktor vorgesehen sein. Letzteres hat den Vorteil, dass mit der gleichen Vorrichtung 10 unterschiedliche Muster von zu verbiegenden Wicklungsköpfen abgearbeitet werden können, so dass Wellenwicklungen 12 mit unterschiedlicher Lagenänderung herstellbar sind.

Bei einigen Ausführungsformen der Vorrichtung 10 sind die Führungselemente 48a, 48b, 50a, 50b, 56a, 56b gruppenweise bewegbar. Insbesondere sind als Gruppen jeweils gemeinsam bewegbar: die ersten vorderen Führungselemente 48a, die ersten hinteren Führungselemente 48b, die zweiten vorderen Führungselemente 50a, die zweiten hinteren Führungselemente 50b, die sekundären ersten Führungselemente 56a und die sekundären zweiten Führungselemente 56b. Bei den gezeigten Ausführungen sind die Führungselemente 48a, 48b, 50a, 50b, 56a, 56b, die z.B. als Stifte 60 ausgeführt sind, linear beweglich. Bei anderen nicht dargestellten Ausführungsformen sind alle oder einige der Führungselemente 48a, 48b, 50a, 50b, 56a, 56b schwenkend bewegbar, z.B. an einem Schwenkausleger oder einer Dreheinheit angeordnet.

Die Vorrichtung 10 ist in bevorzugter Ausgestaltung derart ausgebildet, dass jeder geradlinige Drahtabschnitt 28 oder zumindest jede Halbwelle mit zwei benachbarten geradlinigen Drahtabschnitten 28 und einem Wicklungskopf 30 dazwischen zu jeder Zeit des Steckvorganges durch wenigstens ein Führungselement 48a, 48b, 50a, 50b, 56a, 56b geführt wird.

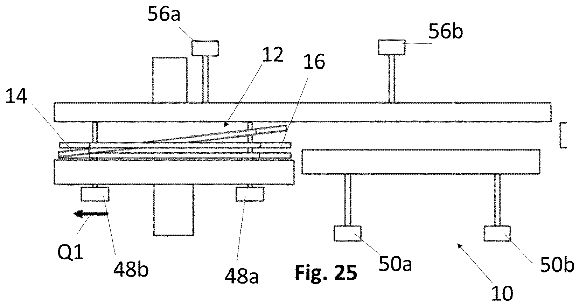

Bei einigen Ausführungsformen der Vorrichtung 10 sind wenigstens einige der Führungselemente, beispielsweise die hinteren ersten Führungselemente 48b, auch in der ersten Querrichtung Q1 bewegbar, dies ist insbesondere in Fig. 25 dargestellt.

Im Folgenden wird anhand der Folge der Darstellungen der Fig. 12 bis 25 eine bevorzugte Schrittfolge für eine bevorzugte Ausführungsform des Verfahrens bzw. des Programmablaufs der Steuerung 36 näher erläutert.

In den Fig. 12 bis 25 wird der Ablauf des Steckvorgangs mit Führungen in Seitenansicht dargestellt. Die Führungselemente 48a, 48b, 50a, 50b zwischen den Drähten 22a-22f werden im folgenden Beispiel mit Pinreihen - Reihen von Stiften 60 - dargestellt. Die Drähte 22a-22f werden im Beispiel zu jedem Zeitpunkt mit mind. zwei Führungselementen - Pinreihen - geführt. Bei bevorzugten Ausgestaltungen ist mindestens ein Führungselement - Pinreihe - immer im Eingriff.

Gemäß Fig. 12 wird der erste Wellenwicklungsteil 14 auf der ersten Aufnahme 18 bereitgestellt. Daneben wird der zweite Wellenwicklungsteil 16 auf der zweiten Aufnahme 34 bereitgestellt. Die ersten Führungselemente 48a, 48b, 50a, 50b sind dabei in der Führungsstellung 52. Der Deckel 64 ist noch von den Aufnahmen 18, 34 entfernt und die sekundären Führungselemente 56a, 56b sind in der Freigabestellung 54, um die Bereitstellung der Wellenwicklungsteile 14, 16 nicht zu behindern.

Gemäß Fig. 13 wird der Deckel 64 zugestellt. Weiter werden die sekundären Führungselemente 56a, 56b zugestellt, indem sie von der Freigabestellung 54 nach unten in die Führungsstellung 52 bewegt werden. Die ersten Führungselemente 48a, 48b, 56a sind in Eingriff mit dem ersten Wellenwicklungsteil 14. Die zweiten Führungselemente 50a, 50b, 56b sind in Eingriff mit dem zweiten Wellenwicklungsteil.

Gemäß Fig. 14 werden anschließend die Stempel 68, 70 zugestellt. Die Teilbereiche 32 des ersten Wellenwicklungsteils 14 werden elastisch verbogen. Die ersten Führungselemente 48a, 48b, 56a sind in Eingriff mit dem ersten Wellenwicklungsteil 14. Die zweiten Führungselemente 50a, 50b, 56b sind in Eingriff mit dem zweiten Wellenwicklungsteil. Weiter wird bei der dargestellten Ausführungsform der Schieber 66 herangeführt.

Gemäß Fig. 15 werden anschließend die vorderen ersten Führungselemente 48a und die hinteren zweiten Führungselemente 50b aus der Führungsstellung 52 in die Freigabestellung 54 bewegt, beispielsweise durch Ausfahren der entsprechenden Pinreihen. Die hinteren ersten Führungselemente 48b und die sekundären ersten Führungselemente 56a sind in der Führungsstellung 52 und somit in Eingriff mit dem ersten Wellenwicklungsteil 14. Die vorderen zweiten Führungselemente 50a und die sekundären zweiten Führungselemente 56b sind in der Führungsstellung 52 und somit in Eingriff mit dem zweiten Wellenwicklungsteil 16.

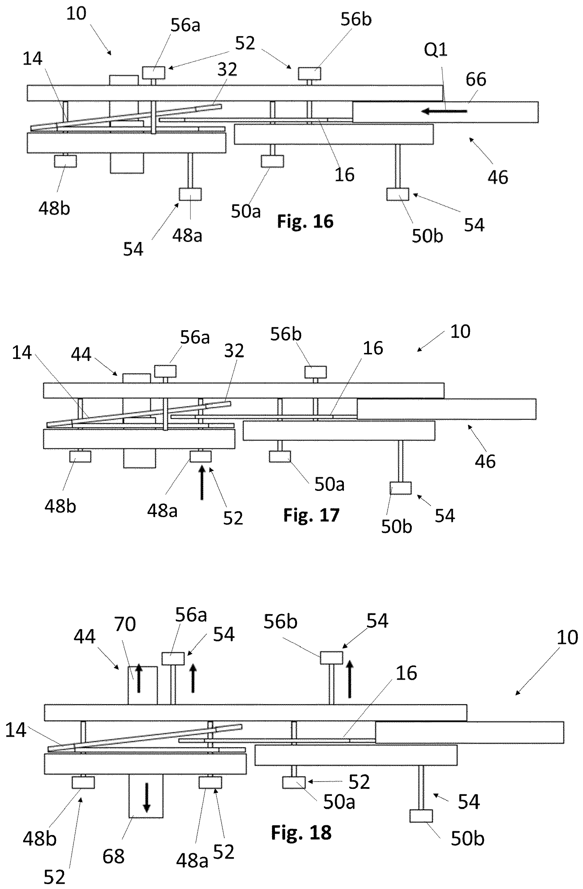

Gemäß Fig. 16 schiebt anschließend der Schieber 66 der Relativverschiebungseinrichtung 46 das zweite Wellenwicklungsteil 16 in das erste Wellenwicklungsteil 14 bis hin zu der Position der vorderen ersten Führungselemente. Insbesondere wird das zweite Wellenwicklungsteil 16 zu einer Position geschoben, in der die vorderen ersten Führungselemente 48a hinter den zu dem ersten Wellenwicklungsteil gewandten Wicklungsköpfen 30 des zweiten Wellenwicklungsteil 16 in das zweite Wellenwicklungsteil 16 eingreifen können. Die hinteren ersten Führungselemente 48b und die sekundären ersten Führungselemente 56a sind in der Führungsstellung 52 und somit in Eingriff mit dem ersten Wellenwicklungsteil 14. Die vorderen zweiten Führungselemente 50a und die sekundären zweiten Führungselemente 56b sind in der Führungsstellung 52 und somit in Eingriff mit dem zweiten Wellenwicklungsteil 16.

Gemäß Fig. 17 werden anschließend die vorderen ersten Führungselemente 48a aus der Freigabestellung 54 in die Führungsstellung 52 bewegt, so dass sie in das erste Wellenwicklungsteil 14 und das zweite Wellenwicklungsteil 16 eingreifen. Dies erfolgt durch Zustellung der die vorderen ersten Führungselemente 48a bildenden Pinreihe. Die hinteren ersten Führungselemente 48b, die vorderen ersten Führungselemente 48a und die sekundären ersten Führungselemente 56a sind in Eingriff mit dem ersten Wellenwicklungsteil 14. Die vorderen zweiten Führungselemente 50a, die sekundären zweiten Führungselemente 56b und die vorderen ersten Führungselemente 48a sind in Eingriff mit dem zweiten Wellenwicklungsteil 16.

Gemäß Fig. 18 werden anschließend die sekundären Führungselemente 56a und 56b aus der Führungsstellung 52 in die Freigabestellung 54 bewegt. Die Stempel 68, 70 der Biegeeinrichtung 44 werden zurückgefahren. Die hinteren ersten Führungselemente 48b und die vorderen ersten Führungselemente 48a sind in Eingriff mit dem ersten Wellenwicklungsteil 14. Die vorderen zweiten Führungselemente 50a und die vorderen ersten Führungselemente 48a sind in Eingriff mit dem zweiten Wellenwicklungsteil 16.

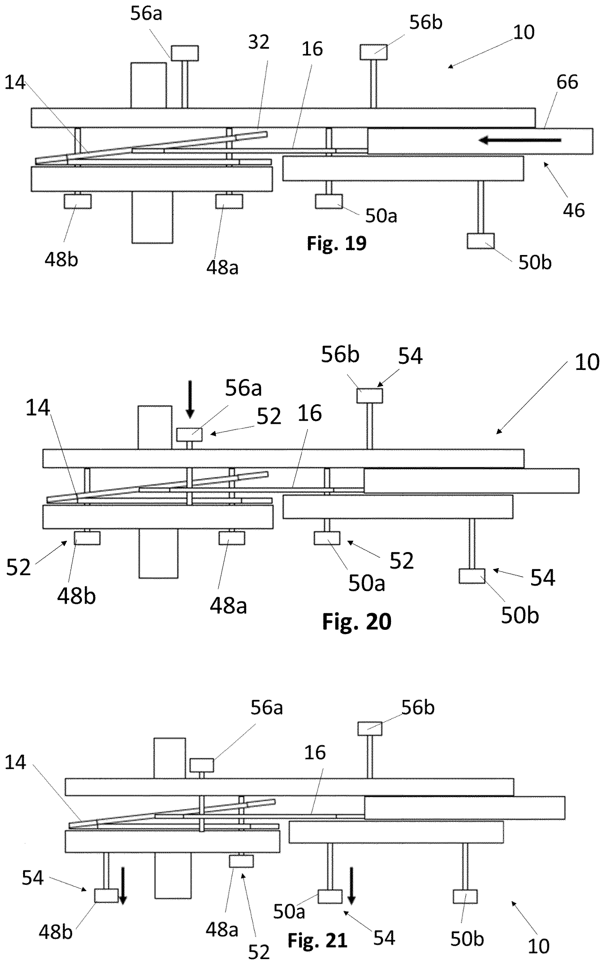

Gemäß Fig. 19 schiebt anschließend der Schieber 66 der Relativverschiebungseinrichtung 46 das zweite Wellenwicklungsteil 16 weiter in der ersten Querrichtung Q1 in das erste Wellenwicklungsteil 14 hinein bis zu einer Position der sekundären ersten Führungselemente 56a. Das Einschieben erfolgt bis zu einer Position, in der die sekundären ersten Führungselemente 56a hinter den zu dem ersten Wellenwicklungsteil 14 zugewandten Wicklungsköpfen 30 des zweiten Wellenwicklungsteils 16 in das zweite Wellenwicklungsteil 16 eingreifen können. Die hinteren ersten Führungselemente 48b und die vorderen ersten Führungselemente 48a sind in Eingriff mit dem ersten Wellenwicklungsteil 14. Die vorderen zweiten Führungselemente 50a und die vorderen ersten Führungselemente 48a sind in Eingriff mit dem zweiten Wellenwicklungsteil 16.

Gemäß Fig. 20 werden anschließend die sekundären ersten Führungselemente 56a aus der Freigabestellung 54 in die Führungsstellung 52 bewegt. Die hinteren ersten Führungselemente 48b, die sekundären ersten Führungselemente 56a und die vorderen ersten Führungselemente 48a sind in Eingriff mit dem ersten Wellenwicklungsteil 14. Die vorderen zweiten Führungselemente 50a, die sekundären ersten Führungselemente 56a und die vorderen ersten Führungselemente 48a sind in Eingriff mit dem zweiten Wellenwicklungsteil 16.

Gemäß Fig. 21 werden anschließend die hinteren ersten Führungselemente 48b und die vorderen zweiten Führungselemente 50a aus der Führungsstellung 52 in die Freigabestellung bewegt. Die sekundären ersten Führungselemente 56a und die vorderen ersten Führungselemente 48a sind in Eingriff mit dem ersten Wellenwicklungsteil 14. Die sekundären ersten Führungselemente 56a und die vorderen ersten Führungselemente 48a sind in Eingriff mit dem zweiten Wellenwicklungsteil 16.

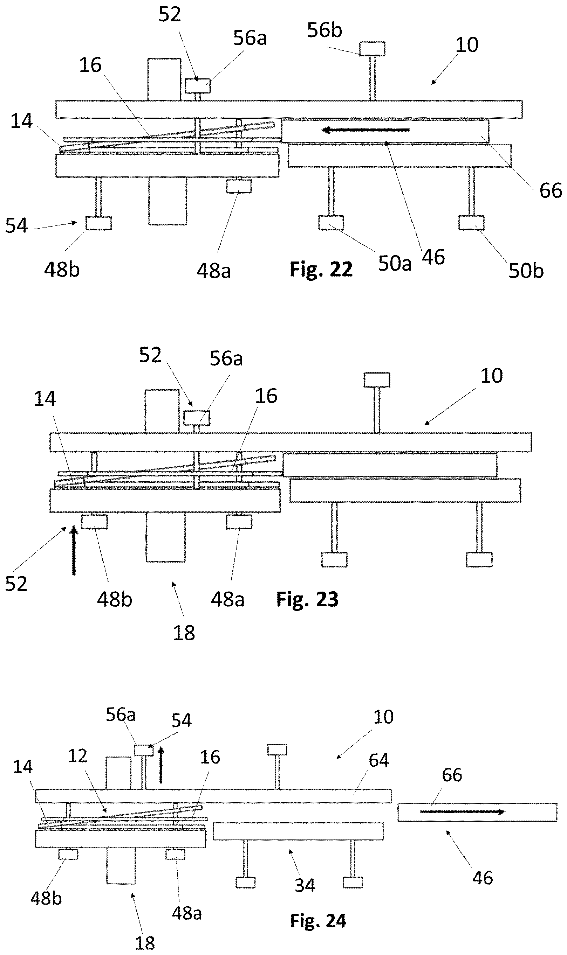

Gemäß Fig. 22 schiebt anschließend der Schieber 66 das zweite Wellenwicklungsteil 16 in der ersten Querrichtung Q1 auf die Endposition. Die sekundären ersten Führungselemente 56a und die vorderen ersten Führungselemente 48a sind in Eingriff mit dem ersten Wellenwicklungsteil 14. Die sekundären ersten Führungselemente 56a und die vorderen ersten Führungselemente 48a sind in Eingriff mit dem zweiten Wellenwicklungsteil 16.

Gemäß Fig. 23 werden anschließend, z.B. durch Einfahren der entsprechenden Pinreihe, die hinteren ersten Führungselemente 48b aus der Freigabestellung 54 in die Führungsstellung 52 bewegt. Die vorderen ersten Führungselemente 48a, die hinteren ersten Führungselemente 48b und die sekundären ersten Führungselemente 56a sind in Eingriff mit dem ersten Wellenwicklungsteil 14. Die vorderen ersten Führungselemente 48a, die hinteren ersten Führungselemente 48b und die sekundären ersten Führungselemente 56a sind in Eingriff mit dem zweiten Wellenwicklungsteil 16.

Gemäß Fig. 24 werden anschließend die sekundären ersten Führungselemente 56a, z.B. durch Ausfahren der entsprechenden Pinreihe aus der Führungsstellung 52 in die Freigabestellung 54 bewegt. Der Schieber 66 wird in seine Grundstellung bewegt. Die vorderen ersten Führungselemente 48a und die hinteren ersten Führungselemente 48b sind in Eingriff mit dem ersten Wellenwicklungsteil 14. Die vorderen ersten Führungselemente 48a und die hinteren ersten Führungselemente 48b sind in Eingriff mit dem zweiten Wellenwicklungsteil 16. Ausgehend von Fig. 24 befindet sich die dann durch Stecken der Wellenwicklungsteile 14, 16 gebildete Wellenwicklung 12 auf der ersten Aufnahme 18 und kann, z.B. zusammen mit der ersten Aufnahme 18 zur Weiterverarbeitung, beispielsweise zu einer weiteren Station zum Einfügen der Wellenwicklung 12 in ein Bauteil einer elektrischen Maschine, bewegt werden.

Gemäß Fig. 25 können einige der Führungselemente, hier entweder die vorderen oder die hinteren ersten Führungselemente 48a, 48b, oder auch sowohl die vorderen als auch die hinteren Führungselemente auch in der ersten Querrichtung Q1 bewegt werden. Durch die Bewegung der vorderen und/oder hinteren Führungselemente 48a, 48b können beispielsweise die Wellenwicklungsteile 14, 16 oder die daraus gebildete Wellenwicklung 12 positioniert werden.

Bei einigen nicht näher dargestellten Ausführungsformen könnten die oder einige der Führungselemente 48a, 48b, 50a, 50b, 56a, 56b nicht nur linear, sondern auch schwenkend ein- und ausgefahren werden.

Wenngleich voranstehend ein Steckvorgang beschrieben worden ist, bei dem jedes Wellenwicklungsteil stets durch zwei Gruppen von Führungselementen geführt wird, sind selbstverständlich auch Ausführungen möglich, bei denen zumindest zeitweise nur eine Gruppe von Führungselementen angreift. Es sind auch Ausführungen mit nur einem Führungselement im Eingriff je Prozessschritt denkbar

Die Führungselemente 48a, 48b, 50a, 50b, 56a, 56b müssen nicht stiftförmig oder pinförmig ausgebildet sein, sondern es sind auch weitere Formen umsetzbar, z.B. kreisförmig, rechteckig usw.

Durch eine Bewegung von primären ersten Führungselementen 48b im Wesentlichen in erster Querrichtung können Wellenwicklungsdrähte 22a-22f wie in Fig. 25 dargestellt zwischen den primären ersten Führungselementen 48a, 48b wie durch einen Kamm aufgezogen werden, um die Wellenwicklungsdrähte 22a-22f in Einschubrichtung (erste Querrichtung Q1) genauer zu positionieren.

Es sind somit eine Vorrichtung (10) und ein Verfahren zum Herstellen einer gesteckten Wellenwicklung (12) durch Zusammenstecken eines ersten Wellenwicklungsteils (14) mit einem zweiten Wellenwicklungsteil (16) beschrieben worden. Um den Steckvorgang prozesssicher zu automatisieren, wird vorgeschlagen, dass eine erste Aufnahme (18) zum Aufnehmen des ersten Wellenwicklungsteils (14) erste Führungselemente (48a, 48b) zum Führen geradliniger Drahtabschnitte (28) des ersten Wellenwicklungsteils (14) aufweist,
dass eine zweite Aufnahme (34) zum Aufnehmen des zweiten Wellenwicklungsteils (16) zweite Führungselemente (50a, 50b) zum Führen geradliniger Drahtabschnitte (28) des zweiten Wellenwicklungsteils (16) aufweist,
dass eine Biegeeinrichtung (44) zum Biegen von Teilbereichen (32) wenigstens einer der Wellenwicklungsteile (14) derart ausgebildet ist, dass einer oder mehrere der zu dem anderen Wellenwicklungsteil (16) gerichteten Wicklungsköpfe (30) zum Ineinanderstecken der Wellenwicklungsteile (14, 16) versetzt werden, und
dass eine Relativverschiebungseinrichtung (46) zum Ineinanderschieben des ersten (14) und des zweiten Wellenwicklungsteils (16) der Wellenwicklung (12) ausgebildet ist, um so die Wellenwicklungsteile (14, 16) ineinander zu stecken,
und dass die ersten (48a, 48b) und/oder die zweiten Führungselemente (50a, 50b) zwischen einer Führungsstellung (52) zum Führen der geradlinigen Drahtabschnitte (28) und einer Freigabestellung (54) zum Freigeben des Weges von Wicklungsköpfen (30) im Zuge des Ineinandersteckens bewegbar sind. Außerdem wird ein entsprechendes Verfahren, vorzugsweise computerimplementiert, vorgeschlagen.

### Bezugszeichenliste

- 10: Vorrichtung
- 12: Wellenwicklung
- 14: erstes Wellenwicklungsteil
- 16: zweites Wellenwicklungsteil
- 18: erste Aufnahme
- 20: Wellenwicklungsmatte
- 22a-22c: erster Wellenwicklungsdraht
- 22d-22f: zweiter Wellenwicklungsdraht
- 24: erste Teilmatte
- 26: zweite Teilmatte
- 28: geradlinige Drahtabschnitt
- 30: Wicklungskopf
- 32: Teilbereich
- 34: zweite Aufnahme
- 36: Steuerung
- 38: Datenverarbeitungseinheit
- 40: Speicher
- 42: Computerprogramm
- 44: Biegeeinrichtung
- 46: Relatiwerschiebungseinrichtung
- 48a: vorderes erstes Führungselement
- 48b: hinteres erstes Führungselement
- 50a: vorderes zweites Führungselement
- 50b: hinteres zweites Führungselement
- 52: Führungsstellung
- 54: Freigabestellung
- 56a: sekundäres erstes Führungselement
- 56b: sekundäres zweites Führungselement
- 58: Vorsprung
- 60: Stift
- 62: erster Rechen
- 63: zweiter Rechen
- 64: Deckel
- 66: Schieber
- 68: erster Stempel
- 70: zweiter Stempel
- L: Längsrichtung
- Q1: erste Querrichtung
- Q2: zweite Querrichtung

## Patentansprüche

1. Vorrichtung (10) zum Herstellen einer gesteckten Wellenwicklung (12), die zum Bilden wenigstens eines Teils einer Spulenwicklung für ein Bauteil einer elektrischen Maschine ausgebildet ist, durch Zusammenstecken eines ersten Wellenwicklungsteils (14) mit einem zweiten Wellenwicklungsteil (16), wobei der erste Wellenwicklungsteil (14) durch wenigstens einen ersten Wellenwicklungsdraht (22a-22c) gebildet ist und der zweite Wellenwicklungsteil (16) durch wenigstens einen zweiten Wellenwicklungsdraht (22de-22f) gebildet ist, wobei sich die Wellenwicklungsdrähte (22a-22f) jeweils in eine Längsrichtung (L) erstrecken und sich in einer im Wesentlichen quer zur Längsrichtung verlaufenden ersten Querrichtung (Q1) erstreckende geradlinige Drahtabschnitte (28) und dachförmige Wicklungsköpfe (30) dazwischen derart aufweisen, dass benachbarte geradlinige Drahtabschnitte (28) durch einen dachförmig gebogenen Wicklungskopf (30) miteinander verbunden sind, wobei die Vorrichtung (10) umfasst:
eine erste Aufnahme (18) zum Aufnehmen des ersten Wellenwicklungsteils (14), wobei die erste Aufnahme (18) erste Führungselemente (48a, 48b) zum Führen geradliniger Drahtabschnitte (28) des ersten Wellenwicklungsteils (14) aufweist,
eine zweite Aufnahme (34) zum Aufnehmen des zweiten Wellenwicklungsteils (16), wobei die zweite Aufnahme (34) zweite Führungselemente (50a, 50b) zum Führen geradliniger Drahtabschnitte (28) des zweiten Wellenwicklungsteils (16) aufweist,
eine Biegeeinrichtung (44) zum Biegen von Teilbereichen (32) wenigstens einer der Wellenwicklungsteile (14) derart, dass einer oder mehrere der zu dem anderen Wellenwicklungsteil (16) gerichteten Wicklungsköpfe (30) in einer zweiten Querrichtung (Q2), die sich im Wesentlichen quer zu der Längsrichtung (L) und quer zu der ersten Querrichtung (Q1) erstreckt, zum Ineinanderstecken der Wellenwicklungsteile (14, 16) versetzt werden, und
eine Relativverschiebungseinrichtung (46) zum Ineinanderschieben des ersten (14) und des zweiten Wellenwicklungsteils (16) der Wellenwicklung (12), um so die Wellenwicklungsteile (14, 16) ineinander zu stecken,
wobei die ersten (48a, 48b) und/oder die zweiten Führungselemente (50a, 50b) zwischen einer Führungsstellung (52) zum Führen der geradlinigen Drahtabschnitte (28) und einer Freigabestellung (54) zum Freigeben des Weges von Wicklungsköpfen (30) im Zuge des Ineinandersteckens bewegbar sind.

2. Vorrichtung (10) nach Anspruch 1, **dadurch gekennzeichnet, dass** die ersten (48a, 48b) und/oder zweiten Führungselemente (50a, 50b) als primäre Führungselemente in der Führungsstellung (52) von einer Seite aus sich in zweiter Querrichtung (Q2) erstreckend in den zugeordneten Wellenwicklungsteil (14, 16) eingreifen und von der Führungsstellung (52) in Richtung auf diese eine Seite zu in die Freigabestellung (54) bewegbar sind und dass zusätzlich zu den primären Führungselementen (48a, 48b, 50a, 50b) sekundäre Führungselemente (56a, 56b) vorgesehen sind, die zwischen einer Freigabestellung (54) zum Passieren von Wicklungsköpfen (30) beim Ineinanderschieben und einer Führungsstellung (52) zur Führung der geradlinigen Drahtabschnitte (28) bewegbar sind.

3. Vorrichtung (10) nach einem der voranstehenden Ansprüche, **gekennzeichnet durch** wenigstens eines oder mehrere der folgenden Merkmale:
3.1 dass vordere Führungselemente (48a, 50a) zum Angreifen an dem anderen Wellenwicklungsteil (16, 14) zugewandten vorderen Bereichen des zu führenden Wellenwicklungsteils (14, 16) und hintere Führungselemente (48b, 50b) zum Angreifen an hinteren Bereichen des zu führenden Wellenwicklungsteils (14, 16), die von dem anderen Wellenwicklungsteil (16, 14) abgewandt sind, vorgesehen sind, wobei die vorderen (48a, 50a) und hinteren Führungselemente (48b, 50b) unterschiedlich zueinander und/oder unabhängig voneinander bewegbar sind;
3.2 dass die ersten Führungselemente (48a, 48b) vordere erste Führungselemente (48a) zum Angreifen an dem zweiten Wellenwicklungsteil (16) zugewandten vorderen Bereichen des ersten Wellenwicklungsteils (14) und hintere erste Führungselemente (48b) zum Angreifen an hinteren Bereichen des ersten Wellenwicklungsteils (14), die von dem zweiten Wellenwicklungsteil (16) abgewandt sind, aufweisen, wobei die vorderen (48a) und hinteren (48b) ersten Führungselemente unterschiedlich zueinander und/oder unabhängig voneinander bewegbar sind;
3.3 dass die zweiten Führungselemente (50a, 50b) vordere zweite Führungselemente (50a) zum Angreifen an dem ersten Wellenwicklungsteil (14) zugewandten vorderen Bereichen des zweiten Wellenwicklungsteils (16) und hintere zweite Führungselemente (50b) zum Angreifen an hinteren Bereichen des zweiten Wellenwicklungsteils (16), die von dem ersten Wellenwicklungsteil (14) abgewandt sind, aufweisen, wobei die vorderen (50a) und hinteren (50b) zweiten Führungselemente unterschiedlich zueinander und/oder unabhängig voneinander bewegbar sind;
3.4 dass die primären Führungselemente (48a, 48b, 50a, 50b) vordere primäre Führungselemente (48a, 50a) zum Angreifen an dem anderen Wellenwicklungsteil (16, 14) zugewandten vorderen Bereichen des zu führenden Wellenwicklungsteils (14, 16) und hintere primäre Führungselemente (48b, 50b) zum Angreifen an hinteren Bereichen des zu führenden Wellenwicklungsteils (14, 16), die von dem anderen Wellenwicklungsteil (16, 14) abgewandt sind, aufweisen, wobei die vorderen (48a, 50a) und hinteren (48b, 50b) primären Führungselemente unterschiedlich zueinander und/oder unabhängig voneinander bewegbar sind;
3.5 dass die sekundären Führungselemente (56a, 56b) vordere sekundäre Führungselemente (56a) zum Angreifen an dem anderen Wellenwicklungsteil (16) zugewandten vorderen Bereichen des zu führenden Wellenwicklungsteils (14) und hintere sekundäre Führungselemente (56b) zum Angreifen an hinteren Bereichen des zu führenden Wellenwicklungsteils (14), die von dem anderen Wellenwicklungsteil (16) abgewandt sind, aufweisen, wobei die vorderen (56a) und hinteren (56b) sekundären Führungselemente unterschiedlich zueinander und/oder unabhängig voneinander bewegbar sind.

4. Vorrichtung (10) nach einem der voranstehenden Ansprüche **dadurch gekennzeichnet, dass** die erste (18) und/oder die zweite (34) Aufnahme eine rechen- oder kammartige Struktur mit Stiften (60) aufweisen, wobei die Stifte (60) beweglich sind und die Führungselemente (48a, 48b, 50a, 50b) bilden.

5. Vorrichtung (10) nach einem der voranstehenden Ansprüche, **gekennzeichnet durch** wenigstens eines oder mehrere der folgenden Merkmale,
5.1 dass die Relatiwersschiebungseinrichtung (46) wenigstens einen Schieber (66) zum relativen Einschieben eines der Wellenwicklungsteile (16) in der ersten Querrichtung (Q1) in das andere der Wellenwicklungsteile (14) aufweist;
5.2 dass die Biegeeinrichtung (44) zum Verbiegen der Teilbereiche (32) an dem ersten Wellenwicklungsteil (14) ausgebildet ist und die Relativverschiebungseinrichtung (46) zum Einschieben des zweiten Wellenwicklungsteils (16) in das verbogene erste Wellenwicklungsteil (14) ausgebildet ist.

6. Vorrichtung (10) nach einem der voranstehenden Ansprüche, **gekennzeichnet durch** wenigstens eines oder mehrere der folgenden Merkmale,
6.1 dass die Biegeeinrichtung (44) wenigstens einen in zweiter Querrichtung (Q2) bewegbaren Stempel (68, 70) aufweist;
6.2 dass die Biegeeinrichtung (44) wenigstens einen ersten Stempel (68) auf einer ersten Seite aufweist, der zum Versetzen eines ersten Teils der Wicklungsköpfe (30) des zu verbiegenden Wellenwicklungsteils (14) in eine erste der beiden zweiten Querrichtungen (Q2) ausgebildet ist;
6.3 dass die Biegeeinrichtung (44) wenigstens einen zweiten Stempel (70) auf einer zweiten Seite aufweist, der zum Versetzen eines zweiten Teils der Wicklungsköpfe (30) des zu verbiegenden Wellenwicklungsteils (14) in eine zweite der beiden zweiten Querrichtungen (Q2) ausgebildet ist;
6.4 dass die Vorrichtung (10) wenigstens einen in zweiter Querrichtung (Q2) bewegbaren Stempel (70) zum Halten wenigstens eines der Wellenwicklungsteile (14) in seiner Position aufweist.

7. Vorrichtung (10) nach einem der voranstehenden Ansprüche, **gekennzeichnet durch** wenigstens eines oder mehrere der Merkmale,
7.1 dass die Führungselemente (48a, 48b, 50a, 50b, 56a. 56b) gruppenweise und/oder linear oder schwenkend bewegbar sind;
7.2 dass die Vorrichtung (10) derart ausgebildet ist, dass jeder geradlinige Drahtabschnitt (28) oder zumindest jede Halbwelle mit zwei benachbarten geradlinigen Drahtabschnitten (28) und einem Wicklungskopf (30) dazwischen zu jeder Zeit des Steckvorganges durch wenigstens ein Führungselement (48a, 48b, 50a, 50b, 56a, 56b) geführt wird;
7.3 dass wenigstens einige der Führungselemente (48a) auch in der ersten Querrichtung (Q1) bewegbar sind.

8. Vorrichtung (10) nach einem der voranstehenden Ansprüche, **gekennzeichnet durch** eine elektronische Steuerung (36), die zum automatischen Steuern der Vorrichtung (10) zur Durchführung des Steckvorganges ausgebildet ist.

9. Verfahren zum Herstellen einer gesteckten Wellenwicklung (12), die zum Bilden wenigstens eines Teils einer Spulenwicklung für ein Bauteil einer elektrischen Maschine ausgebildet ist, durch Zusammenstecken eines ersten Wellenwicklungsteils (14) mit einem zweiten Wellenwicklungsteil (16), wobei der erste Wellenwicklungsteil (14) durch wenigstens einen ersten Wellenwicklungsdraht (22a-22c) gebildet ist und der zweite Wellenwicklungsteil (16) durch wenigstens einen zweiten Wellenwicklungsdraht (22d-22f) gebildet ist, wobei sich die Wellenwicklungsdrähte (22a-22f) jeweils in eine Längsrichtung (L) erstrecken und sich in einer im Wesentlichen quer zur Längsrichtung (L) verlaufenden ersten Querrichtung (Q1) erstreckende geradlinige Drahtabschnitte (28) und dachförmige Wicklungsköpfe (30) dazwischen derart aufweisen, dass benachbarte geradlinige Drahtabschnitte (28) durch einen dachförmig gebogenen Wicklungskopf (30) miteinander verbunden sind, wobei das Verfahren umfasst:
Bereitstellen des ersten Wellenwicklungsteils (14) und von ersten Führungselementen (48a, 48b) zum Führen geradliniger Drahtabschnitte (28) des ersten Wellenwicklungsteils (14) während des Steckvorganges,
Bereitstellen des zweiten Wellenwicklungsteils (16) und von zweiten Führungselementen (50a, 50b) zum Führen geradliniger Drahtabschnitte (28) des zweiten Wellenwicklungsteils (16) während des Steckvorganges,
Biegen von Teilbereichen (32) wenigstens einer der Wellenwicklungsteile (14) derart, dass einer oder mehrere der zu dem anderen Wellenwicklungsteil (16) gerichteten Wicklungsköpfe (30) in einer zweiten Querrichtung (Q2), die sich im Wesentlichen quer zu der Längsrichtung (L) und quer zu der ersten Querrichtung (Q1) erstreckt, zum Ineinanderstecken der Wellenwicklungsteile (14, 16) versetzt werden, und
Ineinanderschieben des ersten und des zweiten Wellenwicklungsteils (14, 16) der Wellenwicklung (12) unter Führung mit den Führungselementen (48a, 48b, 50a, 50b, 56a, 56b), um so die Wellenwicklungsteile (14, 16) ineinander zu stecken,
wobei die ersten und zweiten Führungselemente (48a, 48b, 50a, 50b) zum Passieren von Wicklungsköpfen (30) im Zuge des Ineinandersteckens von einer Führungsstellung (52), in der sie die geradlinigen Drahtabschnitte (28) führen, in eine Freigabestellung (54) zum Freigeben des Weges der Wicklungsköpfe (30) bewegt werden.

10. Verfahren nach Anspruch 9, **gekennzeichnet durch**
10.1 Führen der Bewegung wenigstens eines der Wellenwicklungsteile (16) beim Ineinanderstecken mit primären Führungselementen (48a, 48b, 50a, 50b), die sich von einer Seite aus in das zu führende Wellenwicklungsteil (16) erstrecken, und sekundären Führungselementen (56a, 56b), die sich von der anderen Seite aus in das zu führende Wellenwicklungsteil (16) erstrecken, wobei die primären und sekundären Führungselemente (48a, 48b, 50a, 50b, 56s, 56b) zu unterschiedlichen Zeiten des Steckvorganges in die Freigabestellung (52) überführt werden, so dass permanent eine Führung vorgesehen ist, und/oder
10.2 Führen der Bewegung wenigstens eines der Wellenwicklungsteile (16) beim Ineinanderstecken mit den ersten und zweiten Führungselementen als primäre Führungselemente (48a, 48b, 50a, 50b) und zusätzlich mit sekundären Führungselementen (56a, 56b), wobei die primären und sekundären Führungselemente (48a, 48b, 50a, 50b, 56s, 56b) zu unterschiedlichen Zeiten des Steckvorganges in die Freigabestellung (52) überführt werden, so dass permanent eine Führung vorgesehen ist.

11. Verfahren nach einem der Ansprüche 9 oder 10, **gekennzeichnet durch** Führen der Bewegung wenigstens eines der Wellenwicklungsteile (16, 14) beim Ineinanderstecken mit vorderen Führungselementen (48a, 50a), die sich näher an dem anderen Wellenwicklungsteil (14, 16) befinden, und hinteren Führungselementen (48b, 50b), die sich weiter entfernt von dem anderen Wellenwicklungsteil (14, 16) befinden, wobei die vorderen und hinteren Führungselemente (48a, 48b, 50a, 50b) zu unterschiedlichen Zeiten des Steckvorganges in die Freigabestellung (54) überführt werden.

12. Verfahren nach einem der Ansprüche 9 bis 11, **dadurch gekennzeichnet, dass** jeder geradliniger Drahtabschnitt (28) oder zumindest jede Halbwelle mit zwei benachbarten geradlinigen Drahtabschnitten (28) und einem Wicklungskopf (30) dazwischen zu jeder Zeit des Steckvorganges durch wenigstens ein Führungselement (48a, 48b, 50a, 50b, 56a, 56b) geführt wird.

13. Verfahren nach einem der Ansprüche 9 bis 12, **gekennzeichnet durch** wenigstens einen oder mehrere der folgenden Schritte:
13.1 Bereitstellen von Einzeldrähten (22a-22f) oder Teilmatten (24, 26) als erster Wellenwicklungsteil (14) und zweiter Wellenwicklungsteil (16), so dass der erste und der zweite Wellenwicklungsteil (14, 16) in der ersten Querrichtung (Q1) nebeneinander liegen und mit ihren Längsrichtungen (L) zueinander ausgerichtet sind;
13.2 Anheben oder Absenken eines ersten Teils (32) oder einer ersten Hälfte der Wicklungsköpfe (30) des ersten Wellenwicklungsteils (14);
13.3 optional Absenken oder Anheben oder in Position Halten eines zweiten Teils oder einer zweiten Hälfte der Wicklungsköpfe (30) des ersten Wellenwicklungsteils (14);
13.4 Einschieben des zweiten Wellenwicklungsteils (16) in der ersten Querrichtung (Q1) in den ersten Wellenwicklungsteil (14);
13.5 Freigeben des jeweiligen gebogenen Teils (32) des ersten Wellenwicklungsteils (14), so dass sich dieser wieder in Richtung seiner Ausgangsstellung zurückbewegt oder Zurückbewegen des jeweiligen gebogenen Teils (32) des ersten Wellenwicklungsteils (14) in Richtung seiner Ausgangsstellung;
13.6 Halten des ersten Wellenwicklungsteils (14) und Führen der Bewegung des zweiten Wellenwicklungsteils (16) mit den Führungselementen (48a, 48b, 50a, 50b, 56a, 56b), vorzugsweise derart, dass sie lediglich beim Passieren eines Wicklungskopfes (30) in eine Freigabestellung (54) bewegt werden;
13.7 Führen des zu führenden Wellenwicklungsteils (16) mit mehreren Reihen von Stiften (60), die in einer Richtung (Q2) bewegbar sind, von der wenigstens eine Richtungskomponente entlang der Mittelachse des Stiftes (60) verläuft.

14. Verfahren nach einem der Ansprüche 9 bis 13, **gekennzeichnet durch** Ausrichten wenigstens eines der Wellenwicklungsteile (14, 16) oder der gesteckten Wellenwicklung (12) durch Bewegen wenigstens einiger der Führungselemente (48b) in der ersten Querrichtung (Q1).

15. Computerprogramm (42), umfassend Befehle, die bewirken, dass die Vorrichtung (10) nach einem der Ansprüche 1 bis 8 die Schritte des Verfahrens nach einem der Ansprüche 9 bis 14 ausführt.
